(19) Europäisches Patentamt
European Patent Office
Office européen des brevets

(11) **EP 4 045 818 B1**

(12) **EUROPÄISCHE PATENTSCHRIFT**

(45) Veröffentlichungstag und Bekanntmachung des Hinweises auf die Patenterteilung:
**12.07.2023  Patentblatt 2023/28**

(21) Anmeldenummer: **20797690.3**

(22) Anmeldetag: **16.10.2020**

(51) Internationale Patentklassifikation (IPC):
**F16H 3/66** *(2006.01)*    **F16D 23/06** *(2006.01)*
**F16H 63/30** *(2006.01)*    **F16H 61/02** *(2006.01)*

(52) Gemeinsame Patentklassifikation (CPC):
**F16H 3/66; F16D 11/04; F16D 21/04; F16H 3/663;**
**F16H 3/78; F16H 63/304;** B60Y 2200/91;
F16D 23/04; F16D 28/00; F16D 2023/123;
F16H 2063/3056; F16H 2063/3066;
F16H 2200/0021; F16H 2200/0034;
F16H 2200/2005;                    (Forts.)

(86) Internationale Anmeldenummer:
**PCT/EP2020/079280**

(87) Internationale Veröffentlichungsnummer:
**WO 2021/074428 (22.04.2021 Gazette 2021/16)**

(54) **ZWEIGANGGETRIEBE FÜR EIN ELEKTRISCHES ANTRIEBSSYSTEM UND ANTRIEBSSYSTEM MIT EINEM SOLCHEN ZWEIGANGGETRIEBE**

TWO-SPEED GEARBOX FOR AN ELECTRIC DRIVE SYSTEM, AND DRIVE SYSTEM COMPRISING SUCH A TWO-SPEED GEARBOX

BOÎTE DE VITESSES À DEUX VITESSES POUR UN SYSTÈME D'ENTRAÎNEMENT ÉLECTRIQUE ET SYSTÈME D'ENTRAÎNEMENT COMPRENANT UNE TELLE BOÎTE DE VITESSES À DEUX VITESSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2019   DE 102019128160**

(43) Veröffentlichungstag der Anmeldung:
**24.08.2022   Patentblatt 2022/34**

(73) Patentinhaber: **Höhn GmbH**
**82166 Gräfelfing (DE)**

(72) Erfinder: **HÖHN, Bernd-Robert**
**81925 München (DE)**

(74) Vertreter: **Kramer Barske Schmidtchen**
**Patentanwälte PartG mbB**
**European Patent Attorneys**
**Landsberger Strasse 300**
**80687 München (DE)**

(56) Entgegenhaltungen:
**WO-A1-2014/120064      WO-A1-2017/186473**
**DE-A1-102013 225 519    DE-A1-102016 201 225**
**US-A1- 2010 267 508**

EP 4 045 818 B1

(52) Gemeinsame Patentklassifikation (CPC): (Forts.)
F16H 2200/2007; F16H 2200/2035;
F16H 2200/2064; F16H 2200/2094

## Beschreibung

Die vorliegende Erfindung betrifft ein Zweiganggetriebe für ein elektrisches Antriebssystem und ein elektrisches Antriebssystem mit einem solchen Zweiganggetriebe. Eine Eigenart von Elektromotoren, wie sie üblicherweise in Antriebssystemen für elektrisch betriebene Kraftfahrzeuge verwendet werden, liegt darin, dass die elektrischen Antriebsmaschinen aus dem Stillstand heraus bis zu einer bestimmten Nenndrehzahl ein hohes, annähernd konstantes Drehmoment abgeben, das bei über die Nenndrehzahl hinausgehenden Drehzahlen mit zunehmender Drehzahl deutlich abfällt. Die Leistung des Elektromotors steigt entsprechend mit steigender Drehzahl an und erreicht im Bereich der Nenndrehzahl meist ihren höchsten Punkt. Diese Höchstleistung im Bereich der Nenndrehzahl wird auch bei über die Nenndrehzahl hinausgehender Drehzahl bis zur Höchstdrehzahl nahezu gehalten bzw. sinkt bis zum Erreichen der Höchstdrehzahl nur leicht ab. Die in elektrischen Antriebssystemen für Fahrzeuge eingesetzten Elektromotoren werden üblicherweise derart ausgelegt, dass der Elektromotor bei einer vorgegebenen Höchstgeschwindigkeit des Fahrzeugs im Bereich seiner Höchstdrehzahl betrieben wird und dort auch annähernd die Höchstleistung liefert. Die hierfür erforderliche Übersetzung zwischen der Drehzahl des Elektromotors und mit ihm angetriebenen Rädern kann dazu führen, dass ein Anfahren mit ausreichender Beschleunigung bzw. ausreichendem Drehmoment, insbesondere an beispielsweise einer Steigung, nicht möglich ist. Außerdem kann eine Änderung der Übersetzung auch im normalen Fahrbetrieb vorteilhaft sein, wenn dadurch die Elektromaschine mit besserem Wirkungsgrad läuft.

Aus der DE 10 2013 225 519 A1 ist ein Antriebssystem für ein Elektrofahrzeug bekannt, das ein Planetengetriebe mit einer ein Sonnenrad bildenden Eingangswelle, einem Planetenträger, der einen ersten Satz von Planetenrädern und einen zweiten Satz von Planetenrädern trägt, die fest miteinander verbunden sind, einem ersten Hohlrad, das dem ersten Satz von Planetenrädern zugeordnet ist, und einem zweiten Hohlrad, das dem zweiten Satz von Planetenrädern zugeordnet ist, aufweist. Durch je ein Feststellmittel wird jeweils eines der Hohlräder festgestellt, wodurch sich zwei unterschiedliche Übersetzungen einstellen. Eine Besonderheit dieser Offenbarung ist, dass ein Zweiganggetriebe vorgeschlagen wird, bei dem ohne zusätzliche Bauteile eine Parksperre realisiert wird, indem beide Hohlräder gleichzeitig festgestellt werden. Dazu ist es erforderlich, dass beide Feststellmittel für die beiden Hohlräder unabhängig voneinander betätigbar sind. Es sind also zwei_unabhängige Aktoren für die Feststellmittel erforderlich.

Weitere Getriebe sind aus der US 2010/267508 A1, der DE 10 2016 201225 A1, der WO 2017/186473 A1 und der WO 2014/120064 A1 bekannt.

Der Erfindung liegt die Aufgabe zu Grunde, ein Zweiganggetriebe für ein elektrisches Antriebssystem für ein Fahrzeug zu schaffen, das bei kompaktem und einfachem Aufbau zwei schnell schaltbare Übersetzungsstufen zwischen einer Elektromaschine und den angetriebenen Fahrzeugrädern ermöglicht, wobei die Schaltung von einem ersten Gang in einen zweiten Gang mit mindestens nur geringer Lastunterbrechung erfolgen soll. Weiterhin ist es eine Aufgabe, ein entsprechendes elektrisches Antriebssystem zu schaffen, mit dem mit mindestens nur geringer Lastunterbrechung und schnell von dem ersten Gang in den zweiten Gang geschaltet werden kann und das kompakt ist.

Diese Aufgabe wird gelöst mit dem Getriebe nach Anspruch 1. Weiterhin wird die Aufgabe gelöst mit einem elektrischen Antriebssystem nach Anspruch 9. Vorteilhafte Ausgestaltungen sind in den abhängigen Ansprüchen angegeben.

Durch das Vorsehen von nur einem einzigen Aktor, mittels dem die Schiebemuffe in beide Richtungen bewegbar ist, sinkt der Steuerungsaufwand, die Fehleranfälligkeit, der Bauraum und letztendlich die Kosten. Alternativ können mehrere Aktoren vorgesehen sein.

Bei dem hier offenbarten Getriebe ist über die Feststellvorrichtung nur jeweils eines der beiden Hohlräder an dem Gehäuse feststellbar, d.h. es sind über die Feststellvorrichtung nicht beide Hohlräder gleichzeitig feststellbar. Das Feststellen erfolgt über einen synchronisierten Zahneingriff. Die Feststellvorrichtung weist Synchronkupplungen (synchronisierte Klauenkupplung) auf. Die Reibbereiche zur Synchronisierung sind bevorzugt so groß dimensioniert, dass ihre Drehmomentkapazität groß genug ist, auch während der Schalt- bzw. Synchronisationsphase (z.B. Reduktion der Eingangsdrehzahl bei der Schaltung von 1 → 2) ein im Wesentlichen gleichbleibendes Drehmoment bevorzugt ohne Unterbrechung oder mit nur geringer Unterbrechung/Verringerung am Abtrieb aufrecht zu erhalten. Es werden daher bevorzugt Synchronkupplungen aus LKW-Getrieben verwendet, die direkt mit den beiden Hohlrädern verbunden sind. Die Reibbereiche der Synchronisierungen weisen bevorzugt einen größeren Durchmesser auf als der Durchmesser des kleineren der beiden Hohlräder.

Das Getriebe kann weiterhin sehr kompakt ausgebildet werden und je nach vorhandenem Bauraum oder sonstigen Anforderungen beispielsweise parallel zu einer Antriebsachse des Fahrzeugs neben eine Antriebswelle oder in Fahrzeuglängsrichtung angeordnet werden.

Die zur Anwendung kommenden Verzahnungsgeometrien in der Feststellvorrichtung entsprechen bevorzugt denen von herkömmlich ausgebildeten Synchronkupplungen (mit/ohne Dachverzahnung). So sind beispielsweise insbesondere die Innenverzahnung der Schiebemuffe und die Außenverzahnungen der Synchronringe und optional auch der Synchronkörper geradverzahnt und mit allgemein bekannten Dachverzahnungen versehen. Dachverzahnungen bedeutet hier insbesondere, dass die Enden der Zähne in der Axialrichtung bevorzugt jeweils spitz bzw. dreiecksförmig zulaufen, so dass in einer ersten Phase des Eingriffs von Außenverzahnung und Innenverzahnung zwei schräge Flächen aneinander liegen können. Über diese schrägen Flächen kann bei gleichzeitiger Drehmomentübertragung eine Axialkraft übertragen werden. Diese relative Verdrehstellung von Synchronring zu Schiebemuffe wird auch Sperrstellung genannt. Erst wenn das Drehmoment am Konus ausreichend klein wird, gleiten die schrägen Flächen bei weiter aufrechterhaltener Axialkraft aufeinander ab, was zu einer Ausrichtung der Zähne führt, die in der zweiten Phase des Eingriffs schließlich in die Dachverzahnung der Synchronkörper voll ineinandergreifen (Volleingriffsstellung). Diese Verdrehstellung von Synchronring zu Schiebemuffe wird auch als Freigabestellung bezeichnet.

In der Neutralstellung der Schiebemuffe ist keines der Hohlräder gegenüber dem Gehäuse festgestellt, da zum einen keiner der Synchronkörper im Eingriff mit der Schiebemuffe ist und zum anderen derjenige Synchronring, der im Eingriff mit der Schiebemuffe ist, im Wesentlichen axialkraftfrei gehalten wird, sodass über die Reibbereiche im Wesentlichen kein Drehmoment (keine Abbremsung) erfolgt. Hierdurch wird also ein Leerlauf realisiert, d.h. von der Eingangswelle kann in dieser Stellung bevorzugt kein Drehmoment auf die Ausgangswelle übertragen werden. Die Breite der Innenverzahnung der Schiebemuffe muss für die Realisierung einer solchen Neutralstellung bevorzugt so ausgebildet sein, dass sie kleiner ist, als der Abstand zwischen der Außenverzahnung eines frei drehenden Synchronrings (Synchronring, der nicht mit der Schiebemuffe im Eingriff ist und der bevorzugt Axialkraftfrei gelagert ist) und der Außenverzahnung des diesem Synchronring gegenüberliegenden (also jeweils anderen) Synchronkörpers. Bevorzugt ist die Breite der Innenverzahnung zwischen 0,01mm und 0,2mm kleiner, abhängig von den Toleranzen als dieser Abstand, so dass zum einen aus dem Stand ein Eingriff mit dem Synchronkörper, der dem im Eingriff befindlichen Synchronring zugeordnet ist, durch eine nur sehr kurze Bewegung der Schiebemuffe realisierbar ist. Insbesondere muss die Schiebemuffe für den Volleingriff bevorzugt nur einen Weg zurücklegen, der der Zahnbreite des Synchronkörpers plus den (bevorzugt sehr kleinen) Abstand, den die Innenverzahnung der Schiebemuffe zu der Außenverzahnung des Synchronkörpers in der Neutralstellung aufweist, entspricht. Gleichzeitig wird beim Schalten von dem einen Gang in den anderen Gang während dem Fahren nur in einem sehr kleinen Bereich eine Neutralstellung ausgebildet, was ein nahezu lastunterbrechungsfreies Schalten erlaubt.

Durch den Aufbau des Getriebes gemäß der vorliegenden Erfindung können folgende weitere Stellungen der Schiebemuffe für das Schalten von dem ersten Gang in den anderen (zweiten) Gang und umgekehrt während des Fahrens des Fahrzeugs eingestellt werden.

Zum Schalten von dem ersten Gang in den zweiten Gang (insbesondere während des Fahrens) muss die Schiebemuffe von einer Eingriffsstellung mit dem ersten Synchronkörper über die Neutralstellung (in der ein Eingriff mit dem ersten Synchronkörper gelöst ist) hinaus in Richtung zu dem anderen Synchronkörper hin bewegt und letztendlich über eine Synchronisation, mit der ein Abbremsen oder Festhalten des zweiten Synchronkörpers erreicht wird, mit dem zweiten Synchronkörper in Eingriff gebracht werden. Analog erfolgt eine Schaltung vom zweiten Gang in den ersten Gang.

In der Neutralstellung ist bevorzugt nur noch der erste Synchronisationsring im Eingriff mit der Schiebemuffe, d. h. der erste Synchronkörper ist nicht mehr im Eingriff und wird auch nicht mehr von dem ersten Synchronring (mangels Axialkraft) abgebremst. Er kann sich somit in dieser Stellung der Schiebemuffe beginnen, frei zu drehen, was dazu führt, dass zumindest ab Erreichen einer Enddrehzahl auch kein Drehmoment mehr über das erste Planetengetriebe übertragen werden kann. In der Neutralstellung befindet sich kein Synchronkörper im Eingriff, so dass tatsächlich eine Lastunterbrechung auftreten kann, wenn die Schiebemuffe über eine vorbestimmte Zeitdauer in der Neutralstellung bleibt. Wenn die Verweildauer kurz ist, findet im Wesentlichen keine Lastunterbrechung statt, insbesondere da der nun freigegebene erste Synchronkörper mit dem entsprechenden Hohlrad in der Beschleunigung auf die Enddrehzahl aufgrund seiner Massenträgheit immer noch ein Moment abstützt. Damit diese Zeit möglichst kurz ist, weist die Innenverzahnung der Schiebemuffe eine Mindestbreite auf, die bevorzugt um die Dicke des Synchronringes breiter ist als der axiale Abstand der Außenverzahnungen der Synchronringe.

Zum Schalten von der Neutralstellung in den zweiten Gang muss der zweite Synchronkörper zum Stillstand gebracht werden und muss die Innenverzahnung der Schiebemuffe und die Außenverzahnung des Synchronkörpers in Eingriff kommen. Hierfür wird bevorzugt mittels der Schiebemuffe eine Axialkraft auf den stillstehenden Synchronring aufgebracht und dieser über die konischen Reibeingriff auf den zweiten Synchronkörper geschoben, wodurch dieser zum Stillstand abgebremst, also synchronisiert wird. Im Stillstand kann die Schiebemuffe dann mit dem Synchronkörper in Eingriff gebracht werden (Eingriffsstellung). Die Stellung der Schiebemuffe, in der die Synchronisation, also das Abbremsen erfolgt, wird als Synchronisationsstellung bezeichnet.

Das Aufbringen der Axialkraft auf den zweiten Synchronring in dieser Synchronisationsstellung erfolgt bevorzugt über eine Anlage der schrägen Flächen (Dachfläche) der Dachverzahnung der Schiebemuffe an die schrägen Flächen (Dachfläche) der Dachverzahnung des Synchronrings. Die Zahnköpfe und -täler der Schiebemuffe und die des Synchronrings sind also um einen Winkel verdreht zueinander. Der Synchronring befindet sich in dieser Verdrehstellung in einer Sperrstellung bezüglich der Schiebemuffe. Bei ausgerichteten Zähnen (ohne die Verdrehung zueinander) ist das Aufbringen bzw. Übertragen einer wesentlichen Axialkraft nicht möglich. Stattdessen wird dann die Schiebemuffe ohne Übertragung einer wesentlichen Axialkraft über den Synchronring geschoben und dabei in vollen Eingriff mit diesen gebracht. Diese Verdrehstellung des Synchronrings bezüglich der Schiebemuffe wird als Freigabestellung bezeichnet.

Damit diese Sperrstellung (Verdrehung) zwischen Synchronring und Schiebemuffe eingestellt wird, weist der Synchronring neben der Außenumfangsverzahnung, bevorzugt auf seiner dem jeweils anderen Synchronring zugewandten Seite, mindestens einen radial nach außen vorstehenden Vorsynchronisationsvorsprung auf, der in einer auf der Innenumfangsseite der Schiebemuffe vorgesehenen Vorsynchronisationsnut unabhängig von der Stellung der Schiebemuffe in der Axialrichtung geführt wird. Der Vorsynchronisationsvorsprung und die Vorsynchronisationsnut sind dabei so ausgebildet, dass eine Verdrehung zwischen der Sperrstellung und der Freigabestellung möglich ist und zumindest in der Sperrstellung ein Anschlag realisiert wird. Eine weitergehende Drehung des Synchronrings bezüglich der Schiebemuffe wird verhindert.

Weiter ist bevorzugt ein zwischen den Synchronringen gehaltener Sperrstein vorgesehen, der von der Schiebemuffe in einer Vorsynchronisationsstellung gegen den zweiten Synchronring drückbar ist. Bevorzugt weist die Schiebemuffe innenumfangsseitig hierfür einen abgeschrägten Absatz (schräge Anlagefläche) auf, in dessen Anlage ein entsprechender außenumfangsseitiger Absatz (schräge Anlagefläche) des Sperrsteins bringbar ist. Mit dem durch die Axialkraft einhergehenden konischen Reibeingriff des Synchronrings mit dem sich drehenden zweiten Synchronkörper wirkt ein Bremsmoment auf den Synchronkörper (ohne den Synchronkörper zum Stillstand zu bringen), das den Synchronring relativ zu der Schiebemuffe in die Sperrstellung verdreht. Der Sperrstein ist dabei, beispielsweise über eine Feder, derart zwischen den Synchronringen gehalten, dass in der weiteren Bewegung der Schiebemuffe von der Vorsynchronisationsstellung in die Synchronisationsstellung die abgeschrägten Absätze bevorzugt wieder außer Eingriff kommen und bevorzugt keine maßgebliche Axialkraft mehr über den Sperrstein auf den Synchronring ausübbar ist.

In der Synchronisationsstellung ist die Schiebemuffe bevorzugt im Eingriff mit beiden Synchronringen, von denen einer bevorzugt axialkraftfrei ist, da er nicht in Sperrstellung, sondern in vollen Zahneingriff ist bzw. die Verzahnungen zueinander ausgerichtet sind.

Nach dem Abbremsen des Synchronkörpers zum Stillstand kann die Schiebemuffe unter Ausrichtung der Außenverzahnung des Synchronrings (Rückverdrehung über die schrägen Flächen der Dachverzahnung) mit der Innenverzahnung der Schiebemuffe weiter in Richtung zu dem zweiten Synchronkörper hin bewegt werden. In der weiteren Bewegung der Schiebemuffe kommt diese dann auch mit der Außenverzahnung des zweiten Synchronkörpers in Eingriff (ggfs. unter weiterer Ausrichtung durch die Dachverzahnungen der Schiebemuffe 18 und des Synchronkörpers), so dass der zweite Gang vollständig eingelegt ist.

Das Zurückschalten von dem zweiten in den ersten Gang erfolgt analog. Hier tritt entsprechend zuerst eine Neutralstellung auf, bei der nur der zweite Synchronring im Eingriff ist, anschließend erfolgt mit der Bewegung der Schiebemuffe die Verschiebung des Sperrsteins zur Vorsynchronisation mit dem ersten Synchronring und anschließend die Synchronisation des Synchronkörpers.

Die Synchronisation erfolgt bevorzugt durch konische Reibbereiche/Reibflächen sowohl an Synchronkörper als auch Synchronring. Alternativ oder zusätzlich können weitere Reibbeläge an axialen Endflächen vorgesehen sein. Es kann neben einer Einkonussychronisation auch eine Mehrkonussychronisation vorgesehen sein, bei der mehrere konusförmige Zwischenringe zwischen dem Synchronkörper und dem Synchronring vorgesehen sind.

Es können ein oder mehrere Sperrsteine vorgesehen sein. Es können ein oder bevorzugt mehrere, bevorzugt drei Vorsynchronisationsvorsprünge und -nuten vorgesehen sein.

Statt einer im Gehäuse drehfest aber axial verschiebbar gelagerten Schiebemuffe kann ganz allgemein auch eine Schiebemuffe vorgesehen sein, die, wie bei herkömmlichen Synchronbaugruppen, drehfest aber axial verschiebbar auf einer Abtriebs- oder Antriebswelle gelagert ist. Mittels der Schiebemuffe kann entweder ein erstes auf der Welle frei drehbar gelagertes Rad oder ein zweites auf der Welle frei drehbar gelagertes Rad durch in Eingriff Bringen mit der Schiebemuffe drehfest mit derselben verbunden werden.

Die Außenverzahnungen der Synchronkörper weisen bevorzugt denselben Durchmesser auf. Alternativ können auch unterschiedliche Durchmesser verwendet werden, wobei dann die Schiebemuffe entsprechend gestuft ausgebildet ist.

Die genannten Anforderungen an die Breite der Innenverzahnung der Schiebemuffe gelten bevorzugt insbesondere für das neu hergestellte Getriebe. Weiter ist es bevorzugt, dass das Getriebe derart ausgelegt ist, dass sie auch für das Getriebe an der Verschleißgrenze (der Reibkonus des Synchronringes ist verschlissen, der Abstand zwischen Synchronring und Synchronkörper ist geringer als in der hier gezeichneten Ausgangsstellung) gelten, bei dem die Synchronringe in der Synchronisationsstellung weiter außen liegen.

Bevorzugt gilt das Merkmal, dass die Feststellvorrichtung so ausgebildet ist, dass die Schiebemuffe durch axiale Bewegung in eine Neutralstellung bringbar ist, bei der die Innenverzahnung der Schiebemuffe nicht im Eingriff mit den Außenverzahnungen der Synchronkörper ist und gleichzeitig im Eingriff mit der Außenverzahnung von nur einem der Synchronringe ist, für beide Synchronringe gleichermaßen (also für eine Neutralstellung mit dem einen Synchronring wie für eine andere Neutralstellung mit dem jeweils anderen Synchronring).

Auch bezüglich des Merkmals, dass die Schiebemuffe eine Breite aufweist, die größer ist als der Abstand der Außenverzahnungen der Synchronringe, bevorzugt gemessen in der Neutralstellung, gilt bevorzugt sowohl für die Neutralstellung mit dem einen Synchronring also auch für die mit dem anderen Synchronring im Eingriff. Alternativ, wie oben, kann das Merkmal nur für einen der Synchronringe zutreffen.

Die erste Übersetzung ist betragsmäßig größer als die zweite Übersetzung Es wird auch ein elektrisches Antriebssystem angegeben, bei dem bevorzugt im Wesentlichen lastunterbrechungsfrei, d.h. mit keiner oder nur geringer Lastunterbrechung von einem ersten Gang in einen zweiten Gang geschaltet werden kann. Bevorzugt ist das Antriebssystem so ausgebildet, dass dieser im Wesentliche lastunterbrechungsfreie Schaltvorgang insbesondere bei maximaler Leistungsanforderung durch den Fahrer realisiert wird.

Eine elektrische Antriebsmaschine (Elektromotor) hat näherungsweise mit steigender Motordrehzahl zunächst steigende Leistung, welche ab einer Nenndrehzahl bis zu einer Maximaldrehzahl im Wesentlichen konstant bleibt (Konstantleistungsbereich). Entsprechend ist das jeweils maximale Ausgangsdrehmoment bezogen auf die Drehzahl zu Beginn konstant und sinkt ab der Nenndrehzahl mit weiter steigender Drehzahl bis zu der Maximaldrehzahl (in Form einer Hyperbel) ab. Bei der Maximaldrehzahl hat die elektrische Antriebsmaschine daher ein Maximaldrehzahldrehmoment, das das maximale Ausgangsdrehmoment bei der Maximaldrehzahl ist.

Bei der Maximaldrehzahl der elektrischen Antriebsmaschine wird mit der über das erste Planetengetriebe realisierten ersten Übersetzung eine erste maximale Ausgangsdrehzahl realisiert (mit der im ersten Gang gefahren werden kann). Um diese Ausgangsdrehzahl weiter zu erhöhen, kann in den zweiten Gang geschalten werden, mit dem bei der Maximaldrehzahl (sofern sie in Hinblick auf die verfügbare Leistung noch erreicht werden kann) eine zweite maximale Ausgangsdrehzahl erreicht werden kann.

Das Antriebssystem ist weiter bevorzugt so ausgebildet, dass beim Schalten vom ersten Gang bei Maximaldrehzahl in den zweiten Gang, bei im Wesentlichen gleichbleibender oder nur leicht steigender Ausgangsdrehzahl die Übersetzung des zweiten Gangs zu einer Drehzahl der elektrischen Antriebsmaschine führt, die im Bereich der konstanten Leistungsabgabe der elektrischen Antriebsmaschine liegt. Bevorzugt ist diese Drehzahl größer als die Nenndrehzahl. Bevorzugt ist die Übersetzung des zweiten Ganges so gewählt, dass die Drehzahl der elektrischen Antriebsmaschine bei gleichbleibender Ausgangsdrehzahl nach dem Einlegen des zweiten Gangs größer als die Nenndrehzahl plus ein Viertel der Differenz der Maximaldrehzahl und der Nenndrehzahl ist. Noch bevorzugter liegt die Drehzahl im zweiten Gang in der Mitte zwischen der Nenndrehzahl und der Maximaldrehzahl. Bevorzugter ist weiter, wenn die Übersetzung des zweiten Gangs so gewählt ist, dass die elektrische Antriebsmaschine nach dem Schalten in den zweiten Gang in ihrem Bereich des optimalen Wirkungsgrads arbeitet.

Zur Erreichung einer möglichst gleichmäßigen Beschleunigung sollte die von der Elektromaschine vor dem Schalten abgegebene Leistung bevorzugt im Wesentlichen der nach dem Schalten abgegebenen Leistung entsprechen. Wenn sich die Drehzahl der elektrischen Antriebsmaschine nach dem Schalten vom ersten Gang in den zweiten Gang noch im Konstantleistungsbereich befindet, kann nach dem Schalten dieselbe Leistung abgegeben werden, wie vor dem Schalten. Einziger Unterschied ist, dass die elektrische Antriebsmaschine dann mit geringerer Drehzahl aber höherem Drehmoment dreht.

Um auch während dem Schalten eine möglichst gleichbleibendes Abtriebsdrehmoment am Getriebeausgang zu erhalten, ist das Getriebe, wie oben angegeben, zum einen bevorzugt derart ausgebildet, dass die Schaltzeit zum "Durchfahren" der Neutralstellung sehr kurz ist, indem der Weg, den die Schiebemuffe von der Volleingriffsstellung im ersten Gang bis zu der Synchronisationsstellung für den zweiten Gang verstellt werden muss, minimal ist. Beim Schalten von dem ersten in den zweiten Gang erfolgt zwar in dieser Neutralstellung kurzzeitig keine direkte Drehmomentübertragung von der elektrischen Antriebsmaschine über eines der Planetengetriebe, weil beide Hohlräder frei drehbar sind. Allerdings wird das erste Hohlrad erst mit dem Erreichen der Neutralstellung freigegeben, so dass durch seine Trägheitsmasse und die Beschleunigung des Hohlrades ein Abstützmoment im ersten Getriebe erzeugt wird. Solange dieses "Beschleunigungsmoment" des Hohlrades seine Richtung nicht ändert, tritt auch keine vollständige Lastunterbrechung auf. Das Moment hängt aber sowohl von der Trägheitsmasse des Hohlrades als auch dem Moment der Antriebswelle der Antriebsmaschine ab. Solange das Antriebsmoment der Antriebsmaschine nicht das Vorzeichen wechselt, wird also auch in der Neutralstellung ein gleichsinniges Ausgangsdrehmoment (wie vor dem Schalten), zum Erzeugen eines Vortriebs, erzeugt. Die Geschwindigkeit, mit der die Schiebemuffe von der ersten Stellung in die Synchronisationsstellung bewegbar ist, ist so festgelegt, dass die Neutralstellung nur kurz vorliegt.

Anders als in der Neutralstellung wird in der darauf folgenden Synchronisationsstellung der Schiebemuffe wieder ein Antriebsdrehmoment der elektrischen Antriebsmaschine direkt über das zweite Planetengetriebe an die Ausgangswelle übertragen. Hierbei wird das Drehmoment, das über die Reibbereiche beim Abbremsen des zweiten Hohlrads übertragen wird, über das zweite Planetengetriebe übertragen. Dieses hängt von der Dimensionierung der Reibbereiche und der Anpresskraft, mit der die Reibbereiche mittels der Schiebemuffe aufeinandergedrückt werden, ab. Die Reibbereiche und die Schiebemuffe und der die Schiebemuffe bewegende Aktor bilden zusammen eine Reibkupplung aus. Die Größe der Reibbereiche, deren Lage zueinander und die Anpresskraft sind, wie bei Reibkupplungen üblich, aufeinander abgestimmt. Insbesondere sind sie so aufeinander abgestimmt, dass dauerhaltbar für die jeweilige Anwendung ein maximales Kupplungsdrehmoment über die Reibbereiche übertragbar ist. Dieses Kupplungsdrehmoment ist das Drehmoment, das während des Reibeingriffs zwischen den Reibbereichen und damit letztendlich an den zweiten Synchronkörper übertragen wird.

Bevorzugt wird das maximale Kupplungsdrehmoment so festgelegt, dass es dem maximalen Maximaldrehzahldrehmoment (maximales Drehmoment bei maximaler Drehzahl) entspricht. In diesem Fall wird dieses Kupplungsdrehmoment in der Synchronisationsstellung konstant übertragen, bis das zweite Hohlrad auf null abgebremst ist, wodurch aufgrund der abfallenden Drehzahl letztendlich die während der Synchronisation übertragene Leistung leicht absinkt. Mit dem Beenden der Synchronisation und dem Einkuppeln des zweiten Hohlrads (Bewegen der Schiebemuffe in die zweite Stellung, die der Volleingriffsstellung entspricht), kann anschließend das Ausgangsdrehmoment der elektrischen Antriebsmaschine wieder auf ein nun gegenüber dem Maximaldrehzahldrehmoment erhöhtes Drehmoment bei der entsprechend geringeren Drehzahl angehoben werden. Da die Übersetzung des zweiten Gangs wie oben angegeben, bevorzugt so gewählt ist, dass die Motordrehzahl sich im Konstantleistungsbereich befindet, kann das Drehmoment bevorzugt auf das bei der entsprechend geringeren Drehzahl maximale Ausgangsdrehmoment der elektrischen Antriebsmaschine erhöht werden, so dass im Wesentlichen wieder die vor dem Schalten abgegebene Leistung abgegeben werden kann. Der Fahrer erfährt daher im Bereich der Synchronisation einen leichten Leistungsabfall, der aber unmittelbar danach wieder aufgehoben wird.

Um die für die Synchronisation benötigte Zeit zu Verringern und die Reibkupplung (die Reibbereiche) zu entlasten, wird das Ausgangsdrehmoment der elektrischen Antriebsmaschine während der Synchronisation bevorzugt aktiv gesteuert. Insbesondere wird die elektrische Antriebsmaschine während der Synchronisation bevorzugt aktiv (elektrisch) abgebremst und unterstützt damit die Abbremsung durch die Reibkupplung. Die aktive (elektrische) Abbremsung erfolgt bevorzugt derart, dass durch die Kupplung trotzdem das gewünschte Kupplungsdrehmoment (im obigen Fall das maximale Maximaldrehzahlmoment) übertragen wird, jedoch durch die elektrische Abbremsung in einer wesentlich kürzeren Zeit.

Besonders vorteilhaft bei dieser Konfiguration ist, dass das durch die Reibkupplung zu übertragende Drehmoment im Hinblick auf die Übertragung der maximalen Leistung der elektrischen Antriebsmaschine zumindest zu Beginn der Synchronisation minimiert ist und weit unter dem Nenndrehmoment der elektrischen Antriebsmaschine liegt. Die Reibkupplung kann daher besonders kompakt ausgestaltet werden. Weiterhin kann die Reibkupplung einfach ausgestaltet werden, da der Aktor nur eine vorgegebene konstante Anpresskraft realisieren muss.

In einer weiteren bevorzugten Ausgestaltung kann das maximale Kupplungsdrehmoment so festgelegt sein, dass es dem gegenüber dem Maximaldrehzahldrehmoment erhöhten maximalen Ausgangsdrehmoment der elektrischen Antriebsmaschine nach dem Schalten in den zweiten Gang entspricht. In diesem Fall kann die Reibkupplung bevorzugt weiter so vorgesehen sein, dass die Anpresskraft der Reibbereiche aneinander mittels des Aktors während der Synchronisation derart, bevorzugt kontinuierlich, erhöht werden kann, dass auch während der Synchronisation durchgehend im Wesentlichen die gleiche (maximale) Leistung übertragen wird. Das mit der Kupplung übertragene Drehmoment wird also entsprechend dem mit Abfall der Drehzahl steigendem maximalen Ausgangsdrehmoment der elektrischen Antriebsmaschine bevorzugt kontinuierlich bis zu dem maximalen Ausgangsdrehmoment bei der Synchronisationsdrehzahl erhöht. Bei dieser Ausgestaltung wird somit während der gesamten Synchronisation und danach die gleiche Leistung wie vor dem Schalten abgegeben, es findet also bis auf gegebenenfalls in der Neutralstellung keine Lastunterbrechung statt.

Auch bei dieser Ausgestaltung ist das maximale Kupplungsdrehmoment weit unter dem Nenndrehmoment der elektrischen Antriebsmaschine und im Hinblick auf die während der gesamten Synchronisation konstant übertragenen maximalen Leistung der Antriebsmaschine minimiert. Die Anpresskraft des Aktors muss hier zur Erhöhung des Kupplungsdrehmoments während der Synchronisation gesteuert/geregelt werden.

Auch im letzteren Fall wird die elektrische Antriebsmaschine zur Entlastung der Kupplung unter Beibehaltung der Übertragung eines Kupplungsdrehmoments bevorzugt aktiv elektrisch gebremst.

Weiterhin kann das Antriebssystem auf verschiedenste Weisen modifiziert werden. So kann das Kupplungsdrehmoment geringer als das Maximaldrehzahldrehmoment festgelegt werden. In diesem Fall kann das Ausgangsdrehmoment der elektrischen Antriebsmaschine vor und während dem Schalten auf das Kupplungsdrehmoment verringert werden, so dass wieder im wesentlichen lastunterbrechungsfrei geschaltet werden kann. Das Kupplungsdrehmoment bestimmt letztendlich immer das während der Synchronisation maximal übertragbare Drehmoment.

Mit der aktiven elektrischen Abbremsung der elektrischen Antriebsmaschine während der Synchronisation kann die durch die Reibkupplung zu übertragende Leistung verringert werden. Die während der Rutschphase der Reibkupplung in dieser erzeugte Verlustenergie (=Wärme) wird durch die geringere Schaltzeit reduziert. Je nach Auslegung kann auf die aktive Abbremsung verzichtet werden oder kann die elektrische Antriebsmaschine auch während der Synchronisation ein positives Drehmoment abgeben. Die Reibkupplung könnte bei entsprechender Auslegung letztendlich auch als Beschleunigungsbooster genutzt werden.

In weiteren Ausgestaltungen kann das Schalten von dem ersten Gang in den zweiten Gang auch bei einer Schaltdrehzahl erfolgen, die niedriger als die Maximaldrehzahl der elektrischen Antriebsmaschine ist. Die Schaltdrehzahl kann eine feste Drehzahl sein, bei der geschaltet wird, oder kann dynamisch an die Leistungsanforderung durch den Fahrer oder abhängig von alternativen oder weiteren Parametern festgelegt werden. Die Kupplung kann an das jeweilige für eine im wesentliche lastunterbrechungsfreie Schaltung notwendige Drehmoment angepasst sein.

Wie sich aus dem obigen ergibt, soll der Begriff "im Wesentlichen lastunterbrechungsfrei" bzw. geringe bzw. kleine Lastunterbrechung oder Ähnliches im Zusammenhang mit dem Schalten des Getriebes von dem ersten in den zweiten Gang in der vorliegenden Erfindung bevorzugt ein Getriebe bzw. Antriebssystem umfassen, bei dem die während dem Schalten von dem ersten und den zweiten Gang die an der Ausgangswelle zur Verfügung stehende Leistung (bzw. das Drehmoment) bevorzugt durchgehend oder nur mit einer bevorzugt kurzen Unterbrechung in der Neutralstellung positiv ist bzw. ihr Vorzeichen nicht wechselt und somit einen bevorzugt durchgehenden, aber nicht notwendigerweise konstant starken Vortrieb ermöglicht. Bevorzugt ist der Vortrieb auch im Wesentlichen konstant.

Das Antriebssystem ist bevorzugt so ausgebildet, dass in der Neutralstellung in einem Schaltvorgang von dem ersten in den zweiten Gang bevorzugt ein Drehmoment, dass zwischen 10% bis 95%, noch bevorzugter zwischen 20% und 80%, und noch bevorzugter zwischen 25% und 75% des Maximaldrehzahldrehmoments (maximales Drehmoment bei maximaler Drehzahl) der elektrischen Antriebsmaschine übertragbar ist (und/oder (in vorbestimmten Betriebszuständen) übertragen wird) und die Zeit, in der die Neutralstellung mit dieser Drehmomentübertragung vorliegt bevorzugt zwischen 1ms (Millisekunden) und 100ms, noch bevorzugter zwischen 3ms und 10ms, wie beispielsweise 5ms oder 8ms, liegt. Weiterhin ist das Antriebssystem bevorzugt so ausgebildet, dass in Schaltvorgängen vom ersten in den zweiten Gang in der Synchronisationsstellung (während der Synchronisation) mindestens zeitweise ein Drehmoment übertragbar ist (und/oder (in vorbestimmten Betriebszuständen) übertragen wird), das bevorzugt zwischen 30% und 300% des Maximaldrehzahldrehmoments, bevorzugter zwischen 50% und 250%, noch bevorzugter zwischen 80% und 200%, wie z.B. 90%, 100%, 130% oder 180% beträgt. Das übertragbare Drehmoment kann während der Synchronisation konstant sein oder entsprechend einer vorgegebenen Funktion geändert werden. Bevorzugt liegt zum Ende der Synchronisation das in dem Schaltvorgang maximal von der Reibkupplung zu übertragende Drehmoment vor. Die Dauer der Synchronisation beträgt bevorzugt zwischen 10ms und 2000ms, bevorzugter zwischen 50ms und 500ms und noch bevorzugter zwischen 100ms und 300ms, wie z.B. 150ms, 200ms oder 250ms. Die kurze Synchronisationszeit wird bevorzugt insbesondere durch ein aktives Abbremsen der elektrischen Antriebsmaschine erreicht. Bevorzugt erfolgt das Abbremsen elektrisch, wodurch Energie rekuperierbar ist. Das Antriebssystem hat daher einen guten Wirkungsgrad. Weiterhin liefert die elektrische Antriebsmaschine unmittelbar vor dem Schalten bevorzugt das Maximaldrehzahldrehmoment.

Weiterhin ist das Antriebssystem bevorzugt so ausgebildet, dass für den Fall, dass der Fahrer bei der Schaltgeschwindigkeit (bevorzugt die Maximaldrehzahl) nur einen Teil der möglichen Maximalleistung (und des damit verbunden Maximaldrehzahldrehmoments) anfordert, auch hier das Schalten vom ersten in den zweiten Gang bei Erreichen der Schaltgeschwindigkeit ((bevorzugt die Maximaldrehzahl) eingeleitet wird. Der Aktor presst über die von ihm erzeugte Axialkraft den Synchronring auf den Reibkegel und erzeugt ein der Axialkraft proportionales Drehmoment. Dies kann während des Schaltvorgangs konstant sein oder mit ansteigendem Drehmoment. Eine Schaltung mit ansteigendem Drehmoment hat den Vorteil, dass die Leistung während des Schaltvorgangs konstant bleibt und dem Kundenwunsch damit direkt folgt. Eine Schaltung mit konstantem Drehmoment hat den Vorteil, dass während des Schaltvorgangs (Schaltzeit ca. 0,3s) der Aktor nicht geregelt werden muss.

Weiterhin kann das Antriebssystem so ausgebildet sein, dass in dem Fall, in dem der Fahrer beispielsweise während der Schaltung die Leistungsanforderung reduziert, das über die Reibkupplung übertragene Drehmoment während der Synchronisation verringert wird, so dass nach und/oder während dem Schalten das Ausgangsdrehmoment verringert wird.

Bei den Begriffen Maximaldrehzahldrehmoment, Maximalleistung etc. der elektrischen Antriebsmaschine ist bevorzugt auf die jeweils vom Hersteller angegebenen Kennwerte für einen Dauerbetrieb abzustellen.

Weiterhin ist in der Synchronisationsstellung der Schiebemuffe die Innenverzahnung mit keiner der Außenverzahnungen der Synchronkörper im Eingriff und wird bevorzugt auf nur einen der Synchronringe eine Axialkraft zum Abbremsen des entsprechenden Synchronkörpers ausgeübt. Dies wird dadurch realisiert, dass derjenige Synchronring, auf den die Axialkraft aufgebracht wird, sich in Sperrstellung bezüglich der Schiebemuffe befindet und der jeweils andere Synchronring sich gerade nicht in Sperrstellung, sondern im Volleingriff befindet, bei dem die Zahntäler mit den Zahnköpfen zueinander ausgerichtet sind, also auf jeweils einer gemeinsamen Linie liegen.

Die Erfindung wird im Folgenden anhand schematischer Zeichnungen beispielhaft und mit weiteren Einzelheiten erläutert. In den Figuren stellen dar:

Fig. 1: eine Prinzipdarstellung eines elektrischen Antriebssystems mit einem Getriebe nach einer ersten Ausführungsform,

Fig. 2: eine Prinzipdarstellung eines elektrischen Antriebssystems mit einem Getriebe nach einer zweiten Ausführungsform,

Fig. 3: einen Detailausschnitt einer ersten Querschnittsansicht des Getriebes gemäß der zweiten Ausführungsform in Neutralstellung,

Fig. 4: eine Detaildarstellung einer Verstellvorrichtung des Getriebes gemäß der zweiten Ausführungsform in Neutralstellung,

Fig. 5: einen Detailausschnitt der ersten Querschnittsansicht des Getriebes gemäß der zweiten Ausführungsform bei dem der erste Gang eingelegt ist,

Fig. 6: eine Detaildarstellung der Verstellvorrichtung des Getriebes gemäß der zweiten Ausführungsform in einem Zustand, in dem der erste Gang eingelegt ist,

Fig. 7: einen Detailausschnitt einer zweiten Querschnittsansicht des Getriebes gemäß der zweiten Ausführungsform in Vorsynchronisationsstellung zum zweiten Gang,

Fig. 8: einen Detailausschnitt der ersten Querschnittsansicht des Getriebes gemäß der zweiten Ausführungsform in Synchronisationsstellung zum zweiten Gang,

Fig. 9: eine Detaildarstellung der Verstellvorrichtung des Getriebes gemäß der zweiten Ausführungsform in Synchronisationsstellung zum zweiten Gang,

Fig. 10: einen Detailausschnitt der zweiten Querschnittsansicht des Getriebes gemäß der zweiten Ausführungsform in Synchronisationsstellung zum zweiten Gang,

Fig. 11: einen Detailausschnitt der ersten Querschnittsansicht eines Getriebes gemäß der zweiten Ausführungsform bei dem der zweite Gang eingelegt ist,

Fig. 12: eine Detaildarstellung der Verstellvorrichtung des Getriebes gemäß der zweiten Ausführungsform in einem Zustand, in dem der zweite Gang eingelegt ist,

Fig. 13: einen Detailausschnitt der zweiten Querschnittsansicht des Getriebes gemäß der zweiten Ausführungsform in Vorsynchronisationsstellung zum ersten Gang, und

Fig. 14: verschiedene mögliche Schaltungsverläufe in einer idealisierte Kennlinie einer elektrischen Antriebsmaschine mit beispielhaften Schaltungsverläufen für die Schaltung von einem ersten Gang in einen zweiten Gang.

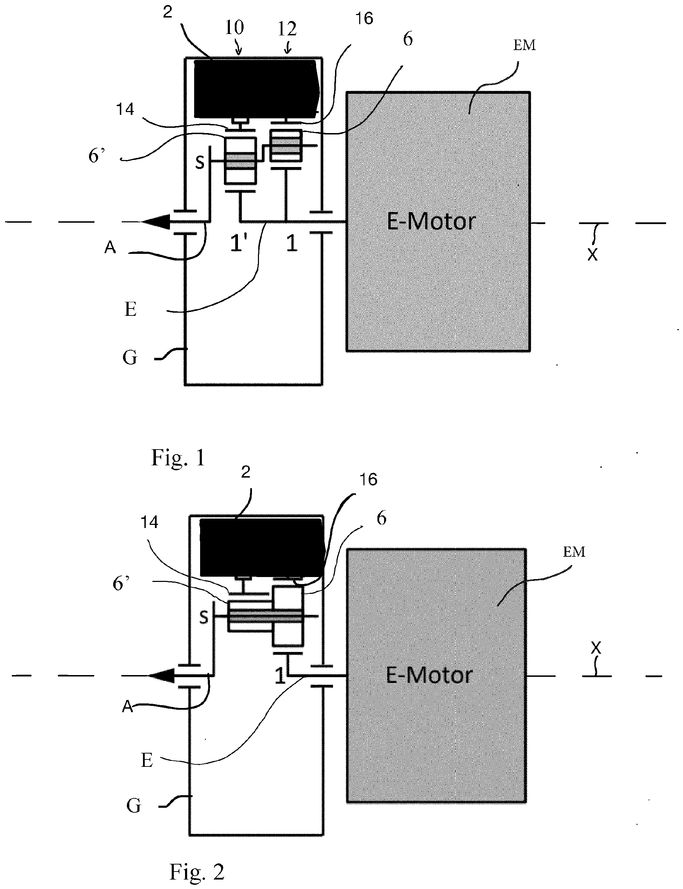

In Fig. 1 zeigt eine Prinzipdarstellung eines elektrischen Antriebssystems mit einer elektrischen Antriebsmaschine (E-Motor) EM und einem Zweiganggetriebe gemäß einer ersten Ausführungsform mit zwei unterschiedlich großen Sonnenrädern 1' und 1, welche auf einer gemeinsamen Eingangswelle E, die als Antrieb für die Sonnenräder dient, vorgesehen sind. Die Eingangswelle E ist koaxial zu einer Drehachse X angeordnet und im Gehäuse G gelagert. In dem Gehäuse sind weiter zwei Hohlräder 14, 16 koaxial zu der Drehachse und um diese drehbar gelagert. Weiterhin ist eine Feststellvorrichtung 2 vorgesehen, die zum Abbremsen jeweils eines der unterschiedlich großen Hohlräder 14, 16 vorgesehen ist. Des Weiteren sind erste Planetenräder 6' und zweite Planetenräder 6 vorgesehen, die auf einem gemeinsamen Steg S um diesen drehbar gelagert sind. Der Steg S wiederum ist derart gelagert, dass er sich um die Drehachse dreht. Ein Ende des Stegs S ist koaxial zu der Drehachse X ausgebildet und dient als Ausgangswelle A bzw. Abtrieb. Bevorzugt sind mehrere solcher Planetenräder 6' und 6 als Planetenradsätze über dem Umfang verteilt. Die Planetenräder 6' und 6 kämmen mit den Hohlrädern 14 und 16 und den Sonnenrädern 1' und 1. Durch jeweils eine Gruppe aus Sonnenrad, auf Steg gelagertem Planetensatz und Hohlrad wird jeweils ein Minusgetriebe der einfachsten Bauart ausgebildet. Insgesamt sind daher zwei nebeneinander angeordnete Planetengetriebe 10, 12 (insbesondere Minusgetriebe der einfachsten Bauart) vorgesehen, welche aufgrund der unterschiedlichen Zähnezahlen/Durchmesser der einzelnen Räder zwei zueinander unterschiedliche Übersetzungen zwischen Eingangswelle E und Ausgangswelle A zur Verfügung stellen. Jedes der zwei Minusgetriebe 10, 12 kann nur dann ein Drehmoment vom Eingang E zum Ausgang A übertragen, wenn das jeweilige Hohlrad zum Abstützen von Drehmoment mit der Feststellvorrichtung 2 gegenüber einem Gehäuse G festgestellt (angehalten) wird. Das erste Planetengetriebe 10 (Eingangswelle E, Sonne 1', Planetenrad 6', Steg S, Hohlrad 14) kann also nur dann ein Drehmoment übertragen, wenn das erste Hohlrad 14 mittels der Feststellvorrichtung 2 festgehalten wird. Entsprechend kann das zweite Planetengetriebe 12 durch Festhalten des zweiten Hohlrads 16 Drehmoment übertragen.

Fig. 2 zeigt eine Prinzipdarstellung eines elektrischen Antriebssystems mit einer elektrischen Antriebsmaschine (E-Motor) EM und einem Zweiganggetriebe gemäß einer zweiten Ausführungsform. Im Unterschied zu dem in der Fig. 1 gezeigten Getriebe ist nur ein einziges auf einer Eingangswelle E drehfest angeordnete Sonnenrad 1 vorgesehen und ist je Planetenradsatz jeweils das zu dem ersten Planetengetriebe gehörende Planetenrad 6 starr mit dem zu dem zweiten Planetengetriebe gehörende Planetenrad 6' verbunden. Diese verbundenen Planetenräder sind gemeinsam auf dem Steg um diesen drehbar gelagert. Insbesondere können die drehfest miteinander verbundenen Planetenräder 6' und 6 auch als ein einteiliges Stufenplanetenrad ausgebildet sein. Die verschiedenen Übersetzungen des ersten und zweiten Ganges ergeben sich auch hier genau wie in Fig. 1 durch Festhalten eines der Hohlräder 14 und 16 mittels der Feststellvorrichtung 2. Der Abtrieb bei beiden Getrieben ist der gemeinsame Steg S, der auch, wie bei Minusgetrieben üblich, das größte Drehmoment überträgt.

Für das Getriebe gemäß Fig. 1 gilt folgendes; Die Übersetzung $i_{1.Gang} = i_{1'S}$ des ersten Ganges (Festhalten des ersten Hohlrads 14) ergibt sich aus der Standübersetzung $i_{1'\,14}$ des ersten Minusgetriebes 10 mit

$$i_{1'\,14} = d_{H14}/d_{1'}$$

mit

$$i_{1'S} = 1 - i_{1'\,14}$$

wobei

$d_{H14}$ = Durchmesser des ersten Hohlrads 14
$d_{1'}$ = Durchmesser des Sonnenrads 1'

Die Übersetzung $i_{2.Gang} = i_{1S}$ des zweiten Ganges (Festhalten des zweiten Hohlrads 16) ergibt sich aus Standübersetzung $i_{1\,16}$ des zweiten Minusgetriebes mit

$$i_{1\,16} = d_{H16}/d_1$$

mit

$$i_{1S} = 1 - i_{1-16}$$

wobei

$d_{H16}$ = Durchmesser des zweiten Hohlrads 16
$d_1$ = Durchmesser der Sonne 1

Für das Getriebe gemäß Fig. 2 gilt folgendes; Die Übersetzung $i_{1.Gang} = i_{1S}$ des ersten Ganges (Festhalten des ersten Hohlrads 14) ergibt sich aus Standübersetzung $i_{1\,14}$ des ersten Minusgetriebes mit

$$i_{1\,14} = (d_{H14}/d_{6'})* (d_6/d_1)$$

mit

$$i_{1S} = 1 - i_{1\,14}$$

wobei

$d_{H14}$ = Durchmesser des ersten Hohlrads 14
$d_1$ = Durchmesser der Sonne 1
$d_{6'}$ = Durchmesser des kleineren Planetenrades 6'
$d_6$ = Durchmesser des größeren Planetenrades 6

Die Übersetzung $i_{2.Gang} = i_{1S}$ des zweiten Ganges (Festhalten des zweiten Hohlrads 16) ergibt sich aus Standübersetzung $i_{1\,16}$ des zweiten Minusgetriebes mit

$$i_{1\,16} = d_{H16}/d_1$$

mit

$$i_{1S} = 1 - i_{1\,16}$$

wobei

$d_{H16}$ = Durchmesser des zweiten Hohlrads 16
$d_1$ = Durchmesser der Sonne 1

Der Unterschied der beiden Getriebe liegt im erreichbaren Übersetzungsbereich. Beispielhaft wird für den Übersetzungsbereich $i_{2.Gang} \approx +2$ und $i_{1.Gang} \approx +5$ das Getriebe aus Fig. 1 verwendet und für den Übersetzungsbereich $i_{2.Gang} \approx +8$ und $i_{1.Gang} \approx +15$ das Getriebe aus Fig. 2 verwendet.

Für die Übersetzungen der Fig. 1 ergeben sich die Übersetzungen iis aus den beiden einfachen Minusgetrieben $i_{1'\,14}$ und $i_{1\,16}$.

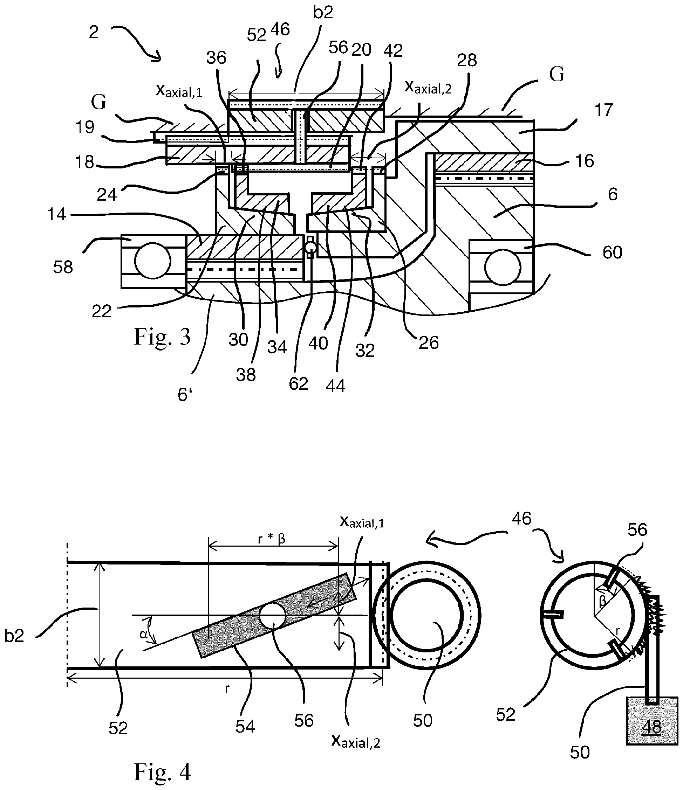

Ausgehend von den beiden oben genannten Ausführungsformen wird die beiden Getrieben gemeinsame Feststellvorrichtung 2 basierend auf der zweiten Ausführungsform aus Fig. 2 anhand der weiteren Figuren beschrieben. Hierbei ist zu beachten, dass Fig. 1 und 2 jeweils nur Prinzipschaubilder sind, aus denen die tatsächliche Anordnung der einzelnen Bauteile, deren Abmessungen etc. nicht zwingend bzw. in allen Aspekten hervorgeht. Fig. 3 bis 10 sind diesbezüglich genauer und stellen aber ebenfalls Prinzipskizzen einer möglichen tatsächlichen Ausgestaltung dar, wenn auch nicht maßstabsgetreu. Insbesondere sind die Figuren untereinander teilweise in unterschiedlichen Vergrößerungsstufen und ggfs. auch nicht vollkommen stringent zueinander dargestellt.

Gleiche Bezugszeichen bedeuten, soweit nicht anders angegeben, dass das jeweils gleiche Bauteil gemeint ist. Es sind nicht in allen Figuren alle Bezugszeichen angegeben, sondern nur jeweils relevante. In einzelnen Figuren nicht bezeichnete Bauteile, die in anderen Figuren ein Bezugszeichen erhalten haben, sind daher, sofern nichts anderes angegeben ist, unverändert.

Neben den Details der Feststellvorrichtung 2 sind in den Figuren 3, 5, 8 und 11 Teile des Gehäuses G und Teile der Hohlräder 14, 16 gezeigt. Die Drehachse X befindet sich jeweils unterhalb und ist nicht dargestellt.

Mit der Feststellvorrichtung 2 ist wahlweise das erste Hohlrad 14 oder das zweite Hohlrad 16 an dem Gehäuse G feststellbar, so dass bei Feststellen des ersten Hohlrads 14 ein Drehmoment von der Eingangswelle E zur Ausgangswelle A über das erste Planetengetriebe 10 übertragbar ist und bei Feststellen des zweiten Hohlrades 16 ein Drehmoment von der Eingangswelle E zur Ausgangswelle A über das zweite Planetengetriebe 12 übertragbar ist.

Die Feststellvorrichtung 2 ist, wie in der ersten Querschnittsansicht von Fig. 3 gezeigt ist, wie folgt ausgebildet:

eine zur Drehachse koaxiale zylindrische Schiebemuffe 18 ist drehfest in dem Gehäuse G entlang der Drehachse X axial bewegbar vorgesehen. Hierfür weist die Schiebemuffe 18 außen und das Gehäuse G innen eine Verzahnung (beispielsweise Steckverzahnung 19) auf.

Die Schiebemuffe weist weiter eine Innenverzahnung 20 auf.

Ein zylindrischer erster Synchronkörper 22 ist starr mit dem ersten Hohlrad 14 verbunden (beispielsweise aufgepresst) oder einteilig (integral) mit diesem ausgebildet und auf einem Außenumfang des Hohlrads vorgesehen. Der erste Synchronkörper 22 weist eine koaxial zu der Drehachse ausgebildete Außenverzahnung 24, die so ausgebildet ist, dass sie mit der Innenverzahnung 20 der Schiebemuffe 18 durch Bewegen der Schiebemuffe 18 entlang der Drehachse X in Eingriff bringbar ist. Der Durchmesser der Innenverzahnung 20 der Schiebemuffe 18 ist also größer als der Außendurchmesser des kleineren ersten Hohlrades 14. Ein zylindrischer zweiter Synchronkörper 26 ist starr mit dem zweiten Hohlrad 16 (beispielsweise aufgepresst) verbunden oder einteilig (integral) mit diesem ausgebildet. Insbesondere ist das zweite Hohlrad 16 außenseitig drehfest mit einem zylindrischen Verbindungsbauteil 17 verbunden, wenn es nicht integral ausgebildet ist. Das Verbindungsbauteil erstreckt sich axial in Richtung zu dem ersten Synchronkörper 22 hin mit einem radial nach innen gestuften Abschnitt an dessen axialen Endvorsprung der zweite Synchronkörper 26 vorgesehen ist. Hierdurch wird ermöglicht, dass das zweite Hohlrad 16 einen größeren Durchmesser aufweist als Teile der Feststellvorrichtung. Weiter ermöglicht dies, dass das zweite Hohlrad 16 im Wesentlichen neben der Feststellvorrichtung 2 angeordnet ist. So kann der radiale Bauraum des Getriebes optimiert werden.

Der zweite Synchronkörper 26 weist eine koaxial zur der Drehachse X ausgebildete Außenverzahnung 28 auf, die so ausgebildet, dass sie mit der Innenverzahnung 20 der Schiebemuffe 18 durch Bewegen der Schiebemuffe 18 entlang der Drehachse X in Eingriff bringbar ist. Der erste Synchronkörper 22 weist auf der dem zweiten Synchronkörper 26 zugewandten Seite einen axialen Vorsprung auf, der als sich in Richtung zu dem zweiten Synchronkörper 26 hin konisch verjüngender Reibbereich 30 ausgebildet ist. Der zweite Synchronkörper 26 weist auf der dem ersten Synchronkörper 22 zugewandten Seite einen axialen Vorsprung auf, der als sich in Richtung zu dem ersten Synchronkörper 22 hin konisch verjüngender Reibbereich 32 ausgebildet ist. Der erste und der zweite Synchronkörper 22, 26 bzw. die Hohlräder 14 und 16, auf denen sie angebracht sind, sind im Wesentlichen nicht axial verschiebbar gelagert. Die Reibbereiche können integral oder als Beschichtung ausgebildet sein.

Weiterhin ist ein erster Synchronring 34 vorgesehen, der koaxial zu der Drehachse angeordnet ist. Der erste Synchronring 34 weist eine Außenverzahnung 36 auf, die so ausgebildet ist, dass sie mit der Innenverzahnung 20 der Schiebemuffe 18 durch Bewegen der Schiebemuffe 18 entlang der Drehachse X in Eingriff bringbar ist (radiale Überlappung). Weiter weist der erste Synchronring 34 auf der dem zweiten Synchronkörper 26 zugewandten Seite einen Vorsprungsbereich auf, der innenumfangsseitig einen sich in Richtung zu dem zweiten Synchronkörper 26 hin konisch verjüngenden Reibbereich 38 aufweist. Der Reibbereich 38 ist derart ausgebildet, dass er bei Aufbringen einer Axialkraft auf den ersten Synchronring 34 in Richtung zu dem ersten Synchronkörper 22 hin einen Reibeingriff mit dem Reibbereich 30 des ersten Synchronkörpers 22 bilden kann.

Weiter weist der erste Synchronring 34 auf seiner dem zweiten Synchronkörper 26 zugewandten Seite der Außenverzahnung 36 mindestens einen radial nach außen vorstehenden Vorsynchronisationsvorsprung auf, der in der ersten Querschnittsansicht von Fig. 3 nicht gezeigt ist, aber wie bei synchronisierten Getrieben üblich ausgebildet ist. Entsprechend weist die Schiebemuffe 18 auf ihrer Innenumfangsseite eine ebenfalls nicht gezeigte aber wie üblich ausgebildete Vorsynchronisationsnut auf. Bevorzugt wird der erste Synchronring 34 unabhängig von der axialen Stellung (also jeder Stellung) der Schiebemuffe über den Vorsynchronisationsvorsprung und die Vorsynchronisationsnut radial in der Schiebemuffe abgestützt. Der Vorsynchronisationsvorsprung und die Vorsynchronisationsnut sind weiter so ausgebildet, dass eine relative Verdrehung des ersten Synchronrings 34 zu der Schiebemuffe 18 um einen vorbestimmten Winkel zwischen einer Sperrstellung und einer Freigabestellung möglich ist. Eine weitergehende Drehung des ersten Synchronrings 34 bezüglich der Schiebemuffe 18 wird verhindert. Die Freigabestellung ist als relative Verdrehstellung definiert, bei der die Zähne des ersten Synchronrings 34 mit den Zähnen der Schiebemuffe 18 ausgerichtet sind, d. h. bei der die Schiebemuffe 18 frei aus einer Stellung, in der die Innenverzahnung 20 nicht mit der Außenverzahnung 36 des ersten Synchronrings 34 im Eingriff ist, in eine Eingriffsstellung verschiebbar ist. Umgekehrt ist die Sperrstellung als relative Verdrehstellung definiert, bei der die in Axialrichtung vorderen Enden der Zahnköpfe des Synchronring 34 in Umfangsrichtung versetzt zu den Zahnfüssen der Schiebemuffe sind, d.h. bezüglich der ausgerichteten Stellung verdreht sind.

Der erste Synchronring 34 ist axial verschiebbar radial in der Schiebemuffe und, je nach Axialposition, auch über seinen konischen Reibbereich 38 auf dem konischen Reibbereich 30 des ersten Synchronkörpers 22 gelagert. Eine Verschiebung des ersten Synchronrings 34 in Richtung zu der Außenverzahnung 24 des ersten Synchronkörpers 22 hin führt dazu, dass der Anpressdruck, mit dem die Reibbereiche aufeinanderliegen, erhöht wird, was auch zu einer erhöhten Reibung zwischen dem ersten Synchronkörper 22 und dem ersten Synchronring 34 führt. Dieser Anpressdruck begrenzt auch eine Bewegung in diese Richtung. Eine entgegengesetzte Bewegung des ersten Synchronring 34 weg von der Außenverzahnung 24 des ersten Synchronkörpers 22 führt zu einer Verringerung des Anpressdrucks, so dass auch die Reibung verringert wird. Die Bewegung weg von der Außenverzahnung 24 kann beispielsweise durch einen in der ersten Querschnittsansicht von Fig. 3, 5, 8 und 11 nicht gezeigten Sperrstein 39 etc. begrenzt werden. Der erste Synchronring 34 ist daher in der Axialrichtung (begrenzt) beweglich auf dem ersten Synchronkörper 22 gelagert.

Weiterhin ist ein bevorzugt symmetrisch bezüglich einer zu der Drehachse senkrechten Symmetrieebene zwischen dem ersten und zweiten Synchronkörper ausgebildeter zweiter Synchronring 40 vorgesehen, der koaxial zu der Drehachse angeordnet ist. Der zweite Synchronring 40 weist eine Außenverzahnung 42, die so ausgebildet ist, dass sie mit der Innenverzahnung 20 der Schiebemuffe 18 durch Bewegen der Schiebemuffe 18 entlang der Drehachse X in Eingriff bringbar ist. Weiter weist der zweite Synchronring 40 auf der dem ersten Synchronkörper 22 zugewandten Seite einen Vorsprungsbereich auf, der innenumfangsseitig einen sich in Richtung zu dem ersten Synchronkörper 22 hin konisch verjüngenden Reibbereich 44 aufweist. Der Reibbereich 44 ist derart ausgebildet, dass er einen Reibeingriff mit dem Reibbereich 32 des zweiten Synchronkörpers 26 bilden kann. Der zweite Synchronring 40 weist wie auch der erste Synchronring 34 einen nicht gezeigten Vorsynchronisationsvorsprung auf, der in einer entsprechend ausgebildeten Vorsynchronisationsnut gehalten wird auf und ist analog zum ersten Synchronring 34 zwischen einer Sperrstellung und einer Freigabestellung verdrehbar. Die Lagerung und Erhöhung bzw. Verringerung des Anpressdrucks ist analog (aber spiegelverkehrt) zu dem ersten Synchronring 34.

Die Außenverzahnung 24 des ersten Synchronkörpers 22 ist bevorzugt im Wesentlichen symmetrisch zu der Außenverzahnung 28 des zweiten Synchronkörpers 26 und die Außenverzahnung 36 des ersten Synchronrings 34 ist bevorzugt im Wesentlichen symmetrisch zu der Außenverzahnung 42 des zweiten Synchronrings 40, jeweils bezüglich einer zwischen ihnen liegenden Symmetrieebene.

Weiterhin ist eine insbesondere auch in Fig. 4 näher dargestellte Verstellvorrichtung 46 zum Verstellen der Stellung der Schiebemuffe 18 entlang der Drehachse X vorgesehen.

Die Verstellvorrichtung 46 weist einen Elektromotor 48 zum Antreiben einer Schneckenwelle 50 auf. Beide sind im Gehäuse G gelagert. Mit der Schneckenwelle 50 wird ein Schneckenrad 52 über eine am Schneckenrad vorgesehene Außenverzahnung drehangetrieben. Das Schneckenrad 52 ist koaxial zu der Schiebemuffe 18 angeordnet und relativ zu dieser um die Drehachse X drehbar. Das Schneckenrad 52 ist außenumfangsseitig bezüglich der Schiebemuffe 18 vorgesehen und berührt diese nicht oder ist zumindest grundsätzlich frei um diese drehbar. Das Schneckenrad 52 ist in dem Gehäuse axial nicht verschiebbar gelagert. Das Schneckenrad 52 ist zwischen zwei Gehäuseteilen axial geführt und radial gelagert, wobei die Teilungsebene (Kontaktfläche zwischen den beiden Gehäuseteilen) nicht dargestellt ist und vom Konstrukteur frei wählbar innerhalb der Breite b2 des Schneckenrades ist.

Das Schneckenrad 52 weist weiter mehrere Führungsnuten 54 auf, die sich geradlinig über eine vorbestimmte Länge entlang der Umfangsrichtung aber geneigt zu dieser um einen Winkel $\alpha$ erstrecken. Die Länge in Umfangsrichtung beträgt dabei im Bogenmaß $r*\beta$, mit $\beta$ als Drehwinkel des Schneckenrads 52 zwischen der einen Endposition und der anderen Endposition und r als Radius des Schneckenrads. Die Führungsnuten 54 sind mindestens innenumfangsseitig ausgebildet oder erstrecken sich in ihrer Tiefenrichtung vollständig durch das Schneckenrad 52 hindurch.

Weiterhin sind an der Schiebemuffe 18 mehrere radial nach außen vorstehende Führungspins 56 vorgesehen, die bevorzugt starr an der Schiebmuffe vorgesehen sind, beispielsweise durch Einpressen. Die Führungspins 56 und die Führungsnuten 54, bzw. die Anordnung der Schiebemuffe 18 und des Schneckenrads 52 ist dabei so ausgebildet, dass jeder der Führungspins 56 im zusammengebauten Zustand des Getriebes in einer der Führungsnuten 54 geführt ist. Die Schiebemuffe 18 ist, wie oben bereits angegeben, über eine Außenverzahnung innenseitig über die Verzahnung 19 im Gehäuse G in der Axialrichtung verschiebbar radial gelagert. Die Verschiebung und Führung der Schiebemuffe 18 in der Axialrichtung wird über die Führungspins 56 erreicht. Diese werden in den Führungsnuten 54 geführt, so dass durch Drehen des Schneckenrads 52 die Stellung der Schiebemuffe 18 in der Axialrichtung verstellbar ist. Insbesondere ergibt sich ausgehend von einem gewünschten Gesamtverfahrweg $x_{Gesamt} = x_{axial1} + x_{axial2}$ der Schiebemuffe 18 (siehe Fig. 4) und einer vorgegebenen Neigung $\alpha$ der Führungsnut zur Umfangsrichtung folgender Drehwinkel $\beta_{Gesamt}$ (in Bogenmaß) des Schneckenrades:

$$\beta_{Gesamt} = (x_{axial1} + x_{axial2})/\tan \alpha *r$$

Der Gesamtverfahrweg $x_{Gesamt} = x_{axial1} + x_{axial2}$ entspricht hierbei dem Weg, den die Schiebemuffe 18 von einem vollen Eingriff mit dem ersten Synchronkörper 22 zu einem vollen Eingriff mit dem zweiten Synchronkörper 26 in der Axialrichtung verfahren werden muss. Über den Neigungswinkel $\alpha$ lässt sich die Kraftübersetzung zum Aufbringen einer Axialkraft mittels der Schiebemuffe zum Herstellen der Synchronisation festlegen.

Weiterhin ist die Schiebemuffe 18 so ausgebildet, dass sie eine Breite aufweist, die größer ist als der Abstand der Außenverzahnungen 36, 42 der Synchronringe 34, 40 in der Axialrichtung (=es gibt eine Stellung, bei der beide Synchronringe im Eingriff sind) und kleiner ist als der Abstand der Außenverzahnungen 24, 28 eines der Synchronkörper 22, 26 zu dem jeweils gegenüberliegenden (dem jeweils anderen Synchronkörper zugeordneten) Synchronring 34, 40 in Axialrichtung (in Synchronisationsstellung ist gegenüberliegender Synchronkörper nicht mehr im Eingriff).

Die beim Schalten von dem ersten Gang zum zweiten Gang ineinandergreifenden Verzahnungen, also die Außenverzahnungen 24, 28 der Synchronkörper 22, 26, die Außenverzahnungen 36, 42 der Synchronringe 34, 40 und die Innenverzahnung 20 der Schiebemuffe 18 weisen die oben beschriebene Dachverzahnung auf, bei der die axialen Zahnenden spitz beziehungsweise dreiecksförmig zulaufen.

Bevorzugt sind weiter Lager 58 und 60 zum Abstützen des gestuften Planeten 6, 6', und ein Lager 62, welches eine axiale Abstützung der Hohlräder 14 und 16 schafft.

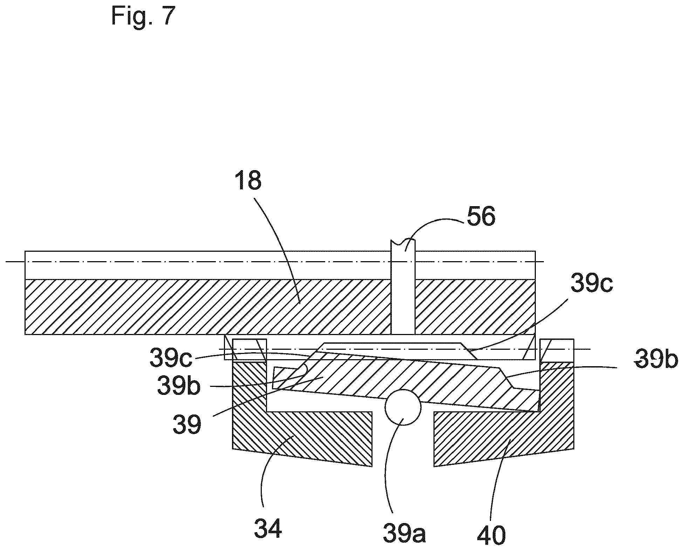

Weiterhin ist, wie aus den zweiten Querschnittsansichten in Fig. 7, 10 und 13, die verschieden zu den ersten Querschnittsansichten in den Fig. 3, 5, 8 und 11 sind, ersichtlich ist, der Sperrstein 39 vorgesehen, mittels dem eine sogenannte Vorsynchronisation zur Verstellung der Synchronringe 34, 40 in die Sperrstellung erreichbar ist. Der Sperrstein 39 ist in einem Raum angeordnet, der außenumfangsseitig von der Schiebemuffe 18, innenumfangsseitig von den Außenumfangsseiten der Reibbereiche 38, 44 der Synchronringe 34, 40 und in Axialrichtung von den radial nach außen vorstehenden Außenverzahnungen 36, 42 der Synchronringe 34, 40 begrenzt ist. Der Sperrstein 39 wird mittels einer Feder 39a, die in Umfangsrichtung innerhalb der Schiebemuffe 18 angeordnet und befestigt ist, radial nach außen gegen einen entsprechenden Sperrsteinaufnahmebereich, der auf der Innenumfangsseite der Schiebemuffe 18 ausgebildet ist, vorgespannt. Der Sperrstein 39 ist außenumfangsseitig an seinen Enden in der Axialrichtung gegenüber einem Mittelteil abgeflacht, weist also zwei schräge Anlageflächen 39b auf. Der Sperrsteinaufnahmebereich weist mittig radial außerhalb der Synchronringe 34, 40 eine Vertiefung auf, weist also zwei den Anlageflächen 39b entsprechende schräge Anlageflächen 39c auf. Die schrägen Anlageflächen 39c in dem Sperrsteinaufnahmebereich sind in der Axialrichtung näher zueinander angeordnet als die schrägen Anlageflächen 39b des Sperrsteins 39. Der Sperrstein ist also nicht mit beiden Anlageflächen 39b gleichzeitig in die Vertiefung einsetzbar.

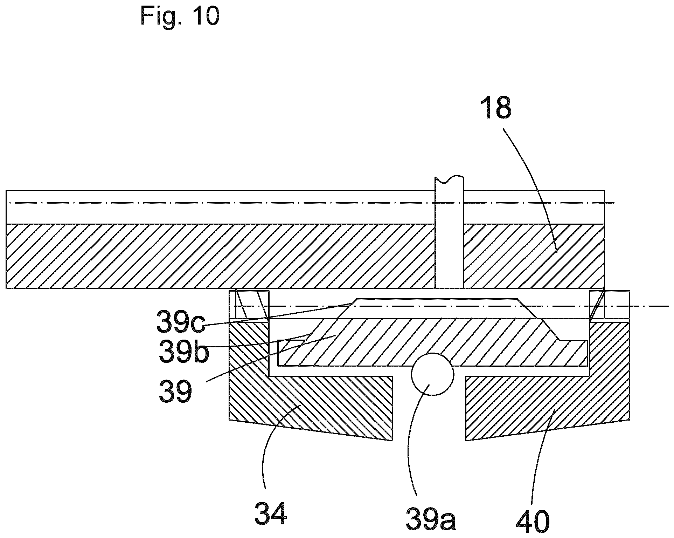

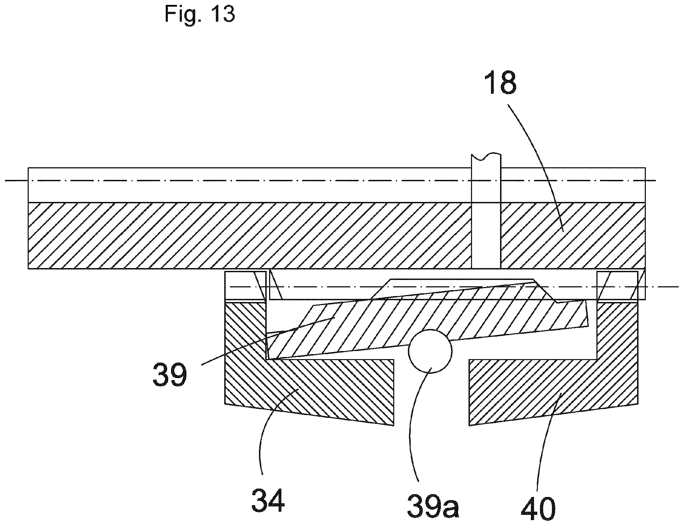

Insgesamt sind der Sperrstein 39 mit seinen Anlageflächen 39b und der Sperrsteinaufnahmebereich mit seinen Anlageflächen 39c derart ausgebildet, dass zumindest folgende relevante Stellungen erreicht werden können: der Sperrstein 39 ist parallel zu der Schiebemuffe 18 angeordnet und keine der Anlageflächen kommt miteinander in Kontakt (siehe Fig. 10). In dieser Stellung sind die Anlageflächen 39b des Sperrsteins 39 beispielsweise in der Axialrichtung vor und hinter den Anlageflächen 39c der Schiebemuffe 18 angeordnet. Oder der Sperrstein 39 ist axial verschoben und durch die Feder 39a senkrecht zur Umfangsrichtung derart verkippt, dass eine der Anlageflächen 39b des Sperrsteins 39 mit der entsprechenden Anlagefläche 39c im Eingriff ist (siehe Fig. 7 und 13). Nur in letzterem Fall kann mittels der Schiebemuffe 18 eine Axialkraft auf den Sperrstein 39 ausgeübt werden. Insgesamt sind bevorzugt mindestens drei Sperrsteine 39 vorgesehen.

Im Folgenden werden einzelne Betriebszustände und Stellungen des Getriebes beschrieben:

Figuren 3 und 4 zeigen eine Neutralstellung der Schiebemuffe 18 in der das Fahrzeug beispielsweise steht. Es kann selbst bei Drehung des Motors (der Eingangswelle; Antriebsmaschine) kein Drehmoment übertragen werden, da die Innenverzahnung 20 der Schiebemuffe 18 nur im Eingriff mit der Außenverzahnung 36 eines der Synchronringe (hier des ersten Synchronrings 34) ist und dieser mangels Axialkraft auch nicht im Reibeingriff mit dem ersten Synchronkörper 22 ist. Selbst wenn die Schiebemuffe 18 in Richtung zu dem ersten Synchronkörper 22 hinbewegt werden würde, würde über die Innenverzahnung 20 der Schiebemuffe 18 aufgrund des vollständigen Zahneingriffs mit der Außenverzahnung 36 des ersten Synchronrings 34 im Wesentlichen keine Axialkraft auf den ersten Synchronring 34 ausübbar sein. Eine Synchronisierung würde also nicht stattfinden. Zum Einlegen des ersten Ganges bei stehendem Fahrzeug muss also der Motor ausgehend von dieser Neutralstellung angehalten sein.

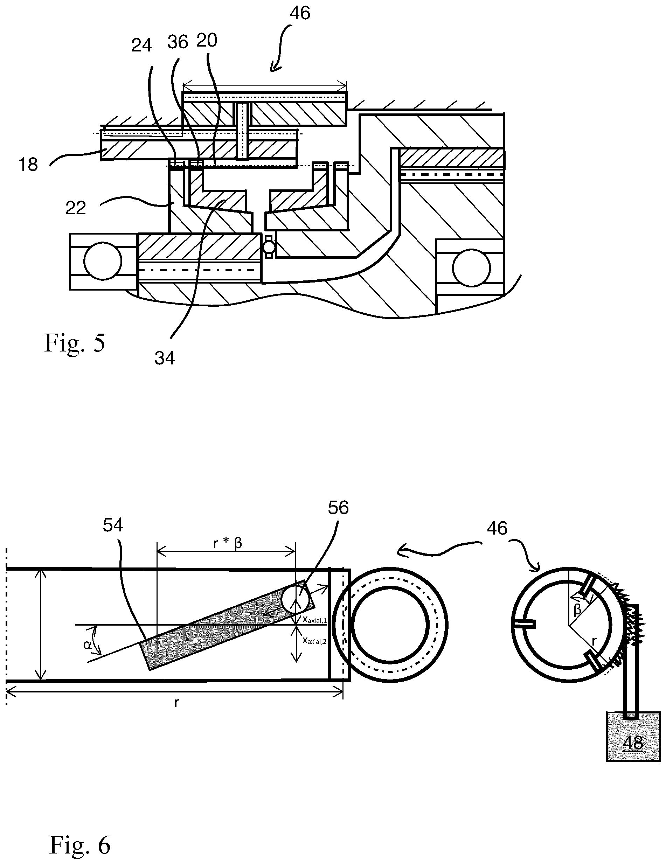

Ausgehend von der Neutralstellung kann der erste Gang bei stehendem Motor und Fahrzeug durch Bewegen der Schiebemuffe 18 mittels der Verstellvorrichtung 46 um den Weg $x_{axial,1}$ in Richtung zu dem ersten Synchronkörper 22 (siehe Fig. 3) hin eingelegt werden. Die Stellung der Schiebemuffe bei vollständig eingelegtem ersten Gang ist in den Fig. 5 und 6 gezeigt. Zur vollen Drehmomentübertragung ist die Innenverzahnung 20 der Schiebemuffe 18 in der erster-Gang-Stellung in vollem Zahneingriff mit der Außenverzahnung 24 des ersten Synchronkörpers 22. Voller Zahneingriff bedeutet hier, dass die gesamte Breite der Außenverzahnung 24 im Eingriff mit der Innenverzahnung 20 ist. Ein Zahneingriff oder Kontakt der Innenverzahnung 20 der Schiebemuffe 18 mit dem zweiten Synchronring 40 bzw. dem zweiten Synchronkörper 26 liegt entsprechend nicht vor. Wie aus Fig. 6 ersichtlich ist, ist der Führungspin 56 in der erster-Gang-Stellung in einer Endposition der Führungsnut angeordnet.

Für das Einlegen des ersten Ganges muss die Schiebemuffe 18 somit nur den kurzen Weg $x_{axial,1}$ zurücklegen, wobei dieser Weg im Wesentlichen der Breite der Außenverzahnung 24 des ersten Synchronkörpers 22 entspricht (tatsächlich entspricht der Weg der Breite plus dem Abstand, den die Innenverzahnung 20 in der Neutralstellung zu der Außenverzahnung 24 des ersten Synchronkörpers 22 aufweist).

Wird nun bei drehendem Motor und fahrendem Fahrzeug in den zweiten Gang mit geringerer Übersetzung geschaltet, wird die Schiebemuffe 18 mittels der Verstellvorrichtung 46 ausgehend von der erster-Gang-Stellung in Richtung zu dem zweiten Synchronkörper 26 bewegt, um eine Drehung des ersten Hohlrads 14 freizugeben und das drehende zweite Hohlrad 16 anzuhalten bzw. festzustellen. In dieser Bewegung wird zunächst wieder die in den Fig. 3 und 4 gezeigte Neutralstellung überfahren, in der nur der erste Synchronring 34 im Eingriff mit der Schiebemuffe 18 ist.

Spätestens in der Bewegung der Schiebemuffe 18 in die Neutralstellung taucht nur die dem ersten Synchronring 34 zugewandten Anlagefläche 39b des Sperrsteins 39 in die Vorsynchronisationsnut ein, so dass Sperrstein 39 in eine zu der Axialrichtung verkippte Lage gebracht wird.

In der weiteren Bewegung erreicht die Schiebemuffe 18 eine in Fig. 7 gezeigte Vorsynchronisationsstellung, in der der Sperrstein ausgehend von der Neutralstellung durch die in Anlage kommenden Anlagefläche 39c der Schiebemuffe 18 und Anlagefläche 39b des Sperrsteins 39 in Richtung zu dem zweiten Synchronring 40 hin verschoben wird. Hierdurch kommt der Sperrstein 39 in Anlage an den zweiten Synchronring 40 und verschiebt ihn in Richtung zu dem zweiten Synchronkörper 26 hin.

Hierdurch wiederum kommt es in dieser Vorsynchronisationsstellung zu einem ersten Reibeingriff zwischen zweiten Synchronring 40 und dem zweiten Synchronkörper 26, was wiederum in einem Drehmoment auf den zweiten Synchronring 40 resultiert. Durch dieses Drehmoment (in Drehrichtung des zweiten Hohlrads) wird der zweite Synchronring 40 in seine Sperrstellung (relative Verdrehstellung) zu der Schiebemuffe 18 gebracht, wodurch die Verzahnungen zueinander verschoben werden.

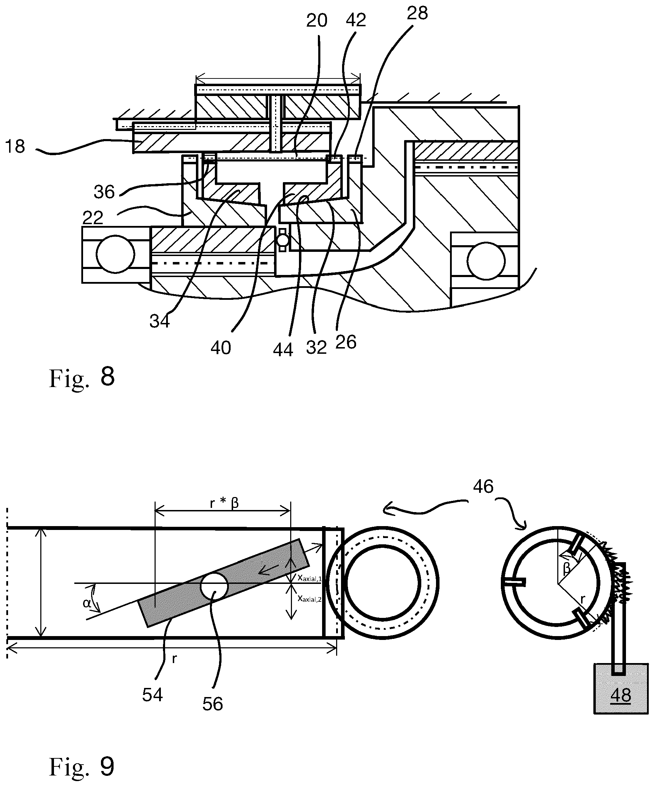

In der weiteren Bewegung der Schiebemuffe 18 in eine Synchronisationsstellung (siehe Fig. 8 bis 10) stoßen die axialen Enden der Verzahnung (Dachverzahnung) der Schiebemuffe 18 gegen die axialen Enden der Verzahnung (Dachverzahnung) des zweiten Synchronrings 40, wodurch eine höhere Axialkraft auf den zweiten Synchronring 40 aufgebracht wird. Dies führt zu einem verstärkten Reibeingriff, der wiederum in einer erhöhten Übertragung von Drehmoment (Bremsmoment) zwischen dem zweiten Synchronkörper 26 und dem zweiten Synchronring 40 resultiert. Hierdurch wiederum wird eine weitere Bewegung der Schiebemuffe 18 in Richtung zu dem zweiten Synchronkörper 26 hin durch die nichtausgerichteten Verzahnungen blockiert.

Wie in Fig. 10 gezeigt ist, verdreht sich der mit der Feder 39a gehaltene Sperrstein 39 in der Bewegung der Schiebemuffe 18 von ihrer Vorsynchronisationsstellung in ihre Synchronisationsstellung in eine zu der Schiebemuffe parallele Ausrichtung, da die Anlageflächen 39b, 39c aufeinander abgleiten. Ausgehend von der in Fig. 10 gezeigten Synchronisationsstellung wird eine weitere Bewegung der Schiebemuffe 18 in Richtung zu dem zweiten Synchronkörper 26 hin nicht behindert.

In der Synchronisationsstellung ist weiterhin die Außenverzahnung 36 des ersten Synchronrings 34 mit der Innenverzahnung 20 der Schiebemuffe 18 im Eingriff. Zwischen dem ersten Synchronring 34 und dem ersten Synchronkörper 22 wirkt mangels Axialkraft in Richtung zu dem ersten Synchronkörper 22 hin im Wesentlichen keine Reibmoment auf den Synchronkörper 22. Der erste Synchronkörper 22 wird mit dem Abbremsen des zweiten Synchronkörpers 26 beschleunigt. Aufgrund der gleichzeitigen Abbremsung und der Beschleunigung wird weiterhin ein Drehmoment an die Ausgangswelle, d.h. den Steg S übertragen, das sich aus dem Drehmoment des Synchronrings ergibt.

Wie aus Fig. 9 ersichtlich ist, befindet sich der Führungspin 56 in der Synchronisationsstellung innerhalb der Führungsnut 54 geringfügig unterhalb der oben beschriebenen Neutralstellung.

Sobald der zweite Synchronkörper 26 angehalten ist, sinkt das über die Dachflächen (axialen Zahnenden) der Verzahnungen der Schiebemuffe 18 und des zweiten Synchronrings 40 übertragene Drehmoment an dem zweiten Synchronring 40 (es liegt kein zusätzliches Bremsmoment mehr vor). In der weiteren Bewegung der Schiebemuffe 18 in Richtung zu dem zweiten Synchronkörper 26 hin gleiten die schrägen Flächen der Verzahnungen der Schiebemuffe 18 und des Synchronrings 40 aufeinander ab und richtet sich dadurch der zweite Synchronkörper 26 mit der Schiebemuffe 18 aus. Im Wesentlichen gleichzeitig kommt die Innenverzahnung 20 der Schiebemuffe 18 außer Eingriff mit der Außenverzahnung 36 des ersten Synchronrings 34.

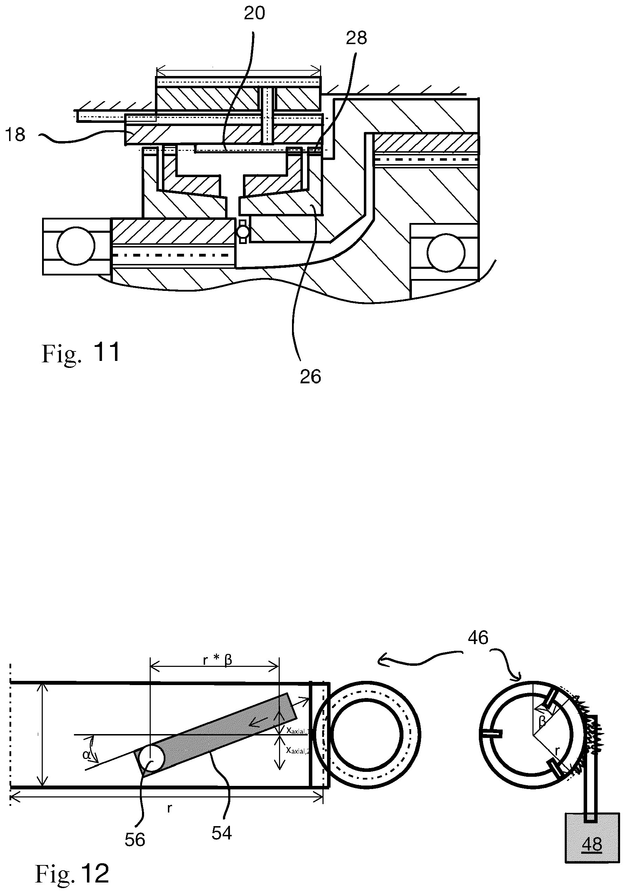

Fig. 11 und 12 zeigen die Endstellung der Schiebemuffe 18, in der der zweite Gang eingelegt ist (zweite-Gang-Stellung). Wie auch bei der erste-Gang-Stellung ist die Innenverzahnung 20 der Schiebemuffe 18 über die gesamte Breite der Außenverzahnung 28 des ersten Synchronkörpers 26 im Eingriff mit dieser. Wie aus Fig. 12 ersichtlich ist, ist der Führungspin 56 in der zweite-Gang-Stellung in einer entgegengesetzte Endposition der Führungsnut 54 angeordnet.

Für das Einlegen des zweiten Ganges muss die Schiebemuffe 18 ausgehend von der Neutralstellung somit im Wesentlichen nur den Weg $x_{axial,2}$ zurücklegen, wobei dieser Weg im Wesentlichen der Breite der Außenverzahnung 28 des zweiten Synchronkörpers 26 plus der Breite der Außenverzahnung 42 des zweiten Synchronrings 40 entspricht (tatsächlich entspricht der Weg der Breite der Außenverzahnungen plus dem Abstand, den die Innenverzahnung 20 in der Neutralstellung zu der Außenverzahnung 42 des zweiten Synchronrings 40 aufweist, plus den Abstand zwischen den Außenverzahnungen des zweiten Synchronkörpers 26 und des zweiten Synchronrings 40). Insbesondere ist weiter festzuhalten, dass spätestens ab dem Erreichen der Synchronisationsstellung wieder ein hohes Drehmoment am Abtrieb anliegt, so dass, wenn überhaupt, eine Lastunterbrechung nur im Bereich der Bewegung durch die Neutralstellung und die Vorsynchronisationsstellung auftritt, der aber aufgrund der kurzen Zeit- und Wegdauer dieser Stellungen und dem Beschleunigungsmoment des anderen Synchronkörpers sehr klein ist.

Beim Umschalten vom zweiten Gang zum ersten Gang erfolgt obiger Ablauf mit geänderter Richtung. Zuerst wird eine weitere Neutralstellung durchfahren, bei der nur der zweite Synchronring 40 mit der Schiebemuffe 18 im Eingriff ist. In dieser Stellung ist auch der Sperrstein 39 entgegengesetzt zu der oben beschriebenen Stellung verkippt, das heißt, dass die dem zweiten Synchronkörper zugewandte Anlagefläche 39b in die Vorsynchronisationsnut eingetaucht ist. In der weiteren Bewegung der Schiebemuffe wird analog eine Vorsynchronisationsstellung zum Ausrichten des ersten Synchronring 34 bezüglich der Schiebemuffe 18 in die Sperrstellung erreicht (siehe Fig. 13). Anschließend erfolgt in einer weiteren Synchronisationsstellung zum ersten Gang die Abbremsung des ersten Synchronkörpers 22 (nicht gezeigt).

Bevorzugt ist die Breite der Innenverzahnung 20 der Schiebemuffe 18 10% kleiner, noch bevorzugter 5% kleiner und noch bevorzugter 1% kleiner als der Abstand der Außenverzahnungen 24, 28 eines der Synchronkörper 22, 26 zu dem jeweils gegenüberliegenden (dem jeweils anderen Synchronkörper zugeordneten) Synchronring 40, 34.

Eine weitere dritte Ausführungsform, die nicht dargestellt ist, wird im Folgenden erläutert.

Alle Merkmale und Stellungen der ersten und zweiten Ausführungsform gelten, soweit nicht anders angegeben, auch für die dritte Ausführungsform.

Ein Getriebe weist ein Gehäuse auf, in dem eine Antriebswelle gelagert ist. Auf der Antriebswelle ist drehfest aber entlang einer Bewegungsachse bewegbar eine Schiebemuffe gelagert. Die Schiebemuffe weist mit radialem Abstand zu der Antriebswelle eine Innenverzahnung auf. Auf der Antriebswelle ist auf der einen Seite der Schiebmuffe ein erster Synchronkörper mit einem außenverzahnten Bereich, der durch Bewegung der Schiebemuffe entlang der Bewegungsachse mit der Innenverzahnung der Schiebemuffe in Eingriff bringbar ist, und einem Reibbereich, der radial innerhalb und axial versetzt in Richtung zu der Schiebemuffe hin bezüglich des außenverzahnten Bereichs ausgebildet ist, vorgesehen. Auf der anderen Seite der Schiebemuffe ist auf der Antriebswelle ein zweiter Synchronkörper mit einem außenverzahnten Bereich, der durch Bewegung der Schiebemuffe entlang der Bewegungsachse mit der Innenverzahnung der Schiebemuffe in Eingriff bringbar ist, und einem Reibbereich, der radial innerhalb und axial in Richtung zu der Schiebemuffe hin versetzt bezüglich des außenverzahnten Bereichs ausgebildet ist, vorgesehen. Weiter ist ein erster Synchronring mit einer Außenverzahnung, die durch Bewegung der Schiebemuffe entlang der Bewegungsachse mit der Innenverzahnung der Schiebemuffe in Eingriff bringbar ist, und einem Reibbereich, der zur Lagerung und Reibeingriff an den Reibbereich des ersten Synchronkörpers ausgebildet ist, vorgesehen. Analog ist ein zweiter Synchronring mit einer Außenverzahnung, die durch Bewegung der Schiebemuffe entlang der Bewegungsachse mit der Innenverzahnung der Schiebemuffe in Eingriff bringbar ist, und einem Reibbereich, der zur Lagerung und Reibeingriff an den Reibbereich des zweiten Synchronkörpers ausgebildet ist, vorgesehen. Das Getriebe ist dabei so ausgebildet, dass die Schiebemuffe in eine Neutralstellung bringbar ist, bei der die Innenverzahnung der Schiebemuffe nicht im Eingriff mit den außenverzahnten Bereichen der Synchronkörper ist und gleichzeitig im Eingriff mit der Außenverzahnung von nur einem der Synchronringe ist. Gleichzeitig ist die Schiebemuffe so ausgebildet, dass sie in einer anderen Stellung mit dem ersten und dem zweiten Synchronring gleichzeitig aber gleichzeitig nicht mit den Außenverzahnungen der Synchronkörper im Eingriff ist. Die Schiebemuffe, die Synchronkörper und die Synchronringe bilden eine Feststellvorrichtung aus.

Die Synchronkörper sind integral oder drehfest mit einem Zahnrad ausgebildet, das eine weitere Außenverzahnung aufweist, die zum Kämmen mit auf einer weiteren Welle oder darauf angebrachten Zahnrädern (An- oder Abtriebswelle) ausgebildet sind. Durch Verstellen der Schiebemuffe (beispielsweise mittels der oben beschriebenen Verstelleinrichtung) zwischen einem Eingriff (einem Feststellen) mit dem einen Synchronkörper oder dem anderen Synchronkörper lassen sich verschiedene Übersetzungen realisieren. Im Gegensatz zur ersten und zweiten Ausführungsform werden die Gangräder auf die Geschwindigkeit der rotierenden Schiebemuffe in der Synchronisationsstellung abgebremst oder beschleunigt. Ein oder mehrere Sperrsteine und die Lagerung der Synchronringe in der Schiebemuffe ist wie betreffend die anderen Ausführungsformen beschrieben.

Eine Verstellvorrichtung zum Verstellen der Schiebemuffe kann wie in den obigen Ausführungsformen oder irgendwie anders geartet (hydraulisch betätigt, linearmotorbetätigt etc.), insbesondere wie herkömmlich über Schaltgabeln ausgebildet sein.

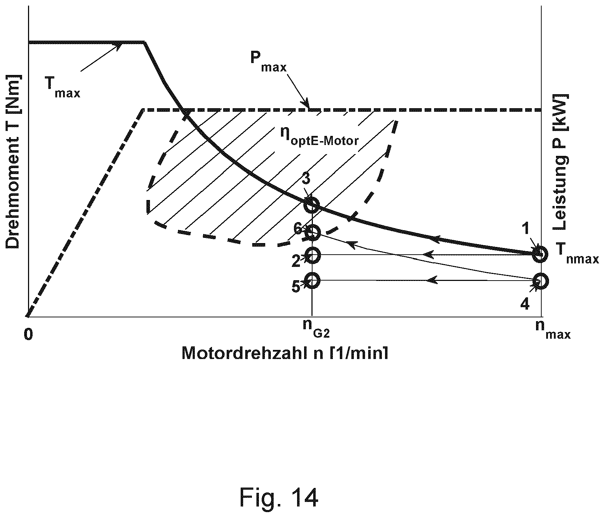

Fig. 14 zeigt verschiedene Schaltungsverläufe in einer idealisierten Drehmoment- und Leistungskennlinie einer elektrischen Antriebsmaschine (E-Motors) sowie den optimalen Wirkungsgradbereich $\eta_{optE\text{-}Motor}$ eines E-Motors (abhängig von der Art der Maschine, Synchron- oder Asynchronmaschine). $T_{max}$ gibt das Nenndrehmoment (maximales Drehmoment) an. $T_{nmax}$ gibt das Maximaldrehzahldrehmoment an. $P_{max}$ gibt die maximale Leistung an. Die Schaltung vom ersten in den zweiten Gang in der hiermit beschriebenen Ausführungsform bei der Maximaldrehzahl $n_{max}$ der elektrischen Antriebsmaschine EM eingeleitet. Auf Grund des - im Vergleich zu Verbrennungsmotoren - sehr großen Drehzahlbereichs mit konstanter Leistung (Konstantleistungsbereich), kann auf der einen Seite ein großer Gangsprung akzeptiert werden, auf der anderen Seite ist es im Prinzip gleichgültig, wann die Schaltung von dem ersten in den zweiten Gang eingeleitet wird, solange der Endpunkt nach der Schaltung in den zweiten Gang noch den maximalen Leistungsbereich der Maschine drehzahlmäßig nicht unterschreitet. Für die Auslegung der Reibkupplung (Synchronkupplung) ist es empfehlenswert, die Synchronisation (das Abbremsen des zweiten Hohlrads) mit geringstmöglichem Drehmoment zu tun. Dies ist der Fall, wenn der E-Motor bis zur Maximaldrehzahlt $n_{max}$ ausgedreht wird und erst bei dieser (geringstes Drehmoment für die Maximalleistung der elektrischen Antriebsmaschine) die Schaltung eingeleitet wird (siehe Punkt 1 in Fig. 14). Die Auslegung der Reibkupplung erfolgt normalerweise nach Drehmoment. Wird die Schaltung prinzipiell erst bei der bevorzugten Drehzahl $n_{max}$ eingeleitet (wie dargestellt), ist die Größe der Reibeinrichtung minimiert und der Aufbau vereinfacht. Die Schaltung von dem ersten Gang in den zweiten Gang ist dann auf zwei Arten möglich. Wird die Synchronisierung nicht geregelt (wird die Schiebemuffe also mit konstanter Kraft (mittels des Aktors) in Richtung des zweiten Hohlrads bewegt), ist das Drehmoment während der Synchronisation konstant und man erreicht den Punkt 2. Hier ist die Klauenkupplung eingelegt (Schiebemuffe wird in Eingriff mit dem Synchronkörper gebracht) und das Drehmoment kann jetzt nach dem Kundenwunsch von der elektrischen Antriebsmaschine eingeregelt werden. Für diesen Fall ist das Synchronisierungsmoment (Kupplungsdrehmoment) der Reibkupplung konstant, der Aktor muss in diesem Fall nicht geregelt werden. Alternativ kann das Kupplungsdrehmoment während der Schaltung durch den Aktor so geregelt werden, dass das Kupplungsdrehmoment in Abhängigkeit von der Drehzahl der elektrischen Antriebsmaschine dem maximalen Ausgangsdrehmoment der elektrischen Antriebsmaschine für die jeweilige Drehzahl entspricht (Kurve zwischen Punkten 1 und 3 in Fig. 14). Für diesen Fall ist während der Schaltung eine konstante Leistung am Abtrieb möglich. Das gleiche gilt für eine Schaltung im Teillastbereich, die mit den Punkten 4 nach 5 bzw. 4 nach 6 dargestellt ist. Dies ist immer dann der Fall, wenn beim Erreichen der maximalen Drehzahl der Antriebsmaschine nicht die Maximalleistung abgerufen wird (dies ist im Normalbetrieb viel häufiger der Fall). Für das Schalten im Teillastbereich wird der Aktor abhängig von dem Leistungswunsch des Kunden (Gaspedalstellung) entsprechend angesteuert, um eine Lastunterbrechung zu Verringerung oder zu vermeiden. Das Verhältnis von $n_{max}/n_{G2}$ entspricht dem Stufensprung des Schaltgetriebes. Zur Regelung des Kupplungsdrehmoments kann ein hier nicht dargestellter und näher beschriebener üblicher Drehmomentsensor in der Reibkupplung vorgesehen sein. Alternativ kann das Kupplungsdrehmoment durch vorher empirisch ermittelte Erfahrungswerte gesteuert werden.

Die Figuren sind als rein schematisch anzusehen. Auch Figuren, die verschiedene Zustände und Ansichten derselben Ausführungsform zeigen sollen, können Details der Ausführungsform in unterschiedlichen Detailgestaltungen darstellen. Maßgeblich bleibt der Schutzumfang der beigefügten Ansprüche.

Die hier verwendeten Begriffe "ungefähr", "etwa", "circa", "im Wesentlichen" oder "im Allgemeinen", die in Zusammenhang mit einem messbaren Wert wie beispielsweise einem Parameter, einer Menge, einer Form, einer zeitlichen Dauer oder dergleichen verwendet werden, schließen Abweichungen oder Schwankungen von ± 10% oder weniger, vorzugsweise ± 5% oder weniger, weiter vorzugsweise ± 1% oder weniger und weiter vorzugsweise ± 0,1% des jeweiligen Wertes oder von dem jeweiligen Wert mit ein, sofern diese Abweichungen bei der Umsetzung der offenbarten Erfindung in die Praxis noch technisch sinnvoll sind. Letztendlich bestimmen die Längen- od. Abmaßtoleranzen der Bauteil die Abweichungen oder Schwankungen der Parameter. Es wird ausdrücklich darauf hingewiesen, dass der Wert, auf den sich der Begriff "ungefähr" bezieht, als solcher ausdrücklich und im Besonderen offenbart ist. Die Angabe von Bereichen durch Anfangs- und Endwerte umfasst all diejenigen Werte und Bruchteile dieser Werte, die von dem jeweiligen Bereich eingeschlossen sind, wie auch dessen Anfangs- und Endwerte.

Bezugszeichenliste

| EM | elektrische Antriebsmaschine (E-Motor) |
|----|----|
| E | Eingangswelle |
| A | Ausgangswelle |
| X | Drehachse |
| G | Gehäuse |
| S | Steg |
| $\alpha$ | Steigungswinkel der Nut im Schneckenrad |
| $\beta$ | Umfangswinkel ("Länge") der Nut |
| 1' | erstes Sonnenrad |
| 1 | zweites Sonnenrad |
| 2 | Feststellvorrichtung |
| 6' | erstes Planetenrad |
| 6 | zweites Planetenrad |
| 10 | erstes Planetengetriebe |
| 12 | zweites Planetengetriebe |
| 14 | erstes Hohlrad |
| 16 | zweites Hohlrad |
| 17 | gestuftes Verbindungsbauteil |
| 18 | Schiebemuffe |
| 20 | Innenverzahnung der Schiebemuffe |
| 22 | erster Synchronkörper |
| 24 | Außenverzahnung des ersten Synchronkörpers |
| 26 | zweiter Synchronkörper |
| 28 | Außenverzahnung des zweiten Synchronkörpers |
| 30 | Reibbereich des ersten Synchronkörpers |
| 32 | Reibbereich des zweiten Synchronkörpers |
| 34 | erster Synchronring |
| 36 | Außenverzahnung des ersten Synchronrings |
| 38 | Reibbereich des ersten Synchronrings |

39   Sperrstein
39a  Feder
39b  Anlagefläche des Sperrsteins
39c  Anlagefläche der Schiebemuffe
40   zweiter Synchronring
42   Außenverzahnung des zweiten Synchronrings
44   Reibbereich des zweiten Synchronrings
46   Verstellvorrichtung
48   Elektromotor
50   Schneckenwelle
52   Schneckenrad
54   Führungsnut im Schneckenrad
56   Führungspin in der Schiebemuffe
58   erstes Lager für den gestuften Planeten
60   Zweites Lager für den gestuften Planeten
62   Axiallager zwischen den Hohlrädern

**Patentansprüche**

1. Getriebe für ein elektrisches Antriebssystem für ein Fahrzeug, mit einem Gehäuse (G),

   einer in dem Gehäuse (G) um eine Drehachse (X) drehbar gelagerten Eingangswelle (E), einer in dem Gehäuse (G) um die Drehachse (X) drehbar gelagerten Ausgangswelle (A), einem ersten Planetengetriebe (10) und einem zweiten Planetengetriebe (12), die koaxial zu der Drehachse (X) nebeneinander angeordnet sind und zueinander unterschiedliche Übersetzungen aufweisen, wobei das erste Planetengetriebe (10) und das zweite Planetengetriebe (12) einen gemeinsamen Planetenträger (S), der in dem Gehäuse (G) um die Drehachse (X) drehbar gelagert und mit der Ausgangswelle (A) verbunden ist, aufweisen und das erste Planetengetriebe (10) ein in dem Gehäuse (G) um die Drehachse (X) drehbar gelagertes erstes Hohlrad (14) und das zweite Planetengetriebe (12) ein in dem Gehäuse (G) um die Drehachse (X) gelagertes zweites Hohlrad (16) aufweist, einer Feststellvorrichtung (2), mit der wahlweise das erste Hohlrad (14) oder das zweite Hohlrad (16) an dem Gehäuse (G) feststellbar ist, so dass bei Feststellen des ersten Hohlrads (14) ein Drehmoment von der Eingangswelle (E) zur Ausgangswelle (A) über das erste Planetengetriebe (10) mit einer ersten Übersetzung übertragbar ist und bei Feststellen des zweiten Hohlrades (16) ein Drehmoment von der Eingangswelle (E) zur Ausgangswelle (A) über das zweite Planetengetriebe (12) mit einer zweiten Übersetzung übertragbar ist, **dadurch gekennzeichnet, dass** die Feststellvorrichtung (2) aufweist

   eine Schiebemuffe (18), die drehfest in dem Gehäuse (G) entlang der Drehachse (X) axial bewegbar angeordnet ist und eine Innenverzahnung (20) aufweist, einen ersten Synchronkörper (22), der starr mit dem ersten Hohlrad (14) verbunden oder integral mit diesem ausgebildet ist und eine Außenverzahnung (24) aufweist, die so ausgebildet, dass sie mit der Innenverzahnung (20) der Schiebemuffe (18) durch Bewegen der Schiebemuffe (18) entlang der Drehachse (X) in eine erste Stellung in Eingriff bringbar ist, und einen zweiten Synchronkörper (26), der starr mit dem zweiten Hohlrad (16) verbunden oder integral mit diesem ausgebildet ist und eine Außenverzahnung (28) aufweist, die so ausgebildet, dass sie mit der Innenverzahnung (20) der Schiebemuffe (18) durch Bewegen der Schiebemuffe (18) entlang der Drehachse (X) in eine zweite Stellung in Eingriff bringbar ist, und eine Verstellvorrichtung (46) mit einem Aktor, durch den die Schiebemuffe (18) entlang der Drehachse (X) zwischen der ersten Stellung und der zweiten Stellung verstellbar ist,

   der erste Synchronkörper (22) auf der dem zweiten Synchronkörper (26) zugewandten Seite einen Reibbereich (30) aufweist und der zweite Synchronkörper (26) auf der dem ersten Synchronkörper (22) zugewandten Seite einen Reibbereich (32) aufweist, ein erster Synchronring (34), der eine Außenverzahnung (36), die so ausgebildet ist, dass sie mit der Innenverzahnung (20) der Schiebemuffe (18) durch Bewegen der Schiebemuffe (18) mittels des Aktors entlang der Drehachse (X) in Eingriff bringbar ist, und einen Reibbereich (38), der zur Anlage an den Reibbereich (30) des ersten Synchronkörpers (22) ausgebildet ist, aufweist, und ein zweiter Synchronring (40), der eine Außenverzahnung (42), die so ausgebildet ist, dass sie mit der Innenverzahnung (20) der Schiebemuffe (18) durch Bewegen der Schiebemuffe (18) mittels des Aktors entlang der Drehachse (X) in Eingriff bringbar ist, und einen Reibbereich (44), der zur Anlage an den Reibbereich (32) des zweiten Synchronkörpers (26) ausgebildet ist, aufweist, vorgesehen sind, die Feststellvorrichtung so ausgebildet ist, dass die Schiebemuffe (18) mit dem Aktor in einer Bewegung entlang der Drehachse (X) in eine Synchronisationsstellung bringbar ist, bei der die Innenverzahnung (20) der Schiebemuffe (18) nicht im Eingriff mit den Außenverzahnungen (24, 28) beider Synchronkörper (22, 26) ist und gleichzeitig die Innenverzahnung (20) der Schiebemuffe (18) mit den Außenverzahnungen (36, 42) beider Synchronringe mindestens teilweise im Eingriff ist und bevorzugt durch die Schiebemuffe (18) Kraft auf einen der Synchronringe (34, 40) in der Richtung der Drehachse (X) ausgeübt wird, so dass der entsprechende Synchronkörper (22, 26) über den Reibeingriff mit dem einen Synchronring (34, 40) abbremsbar ist, und

der Reibbereich (44) des zweiten Synchronrings (40) und der Reibbereich (32) des zweiten Synchronkörpers (26) so dimensioniert sind, dass ihre Drehmomentkapazität groß genug ist, dass beim Bewegen der Schiebemuffe (18) von der ersten Stellung in die zweite Stellung in der Synchronisationsstellung ein Drehmoment an die Ausgangswelle (A) übertragbar ist.

2.  Getriebe nach Anspruch 1, bei dem
die Feststellvorrichtung (2) weiter so ausgebildet ist, dass die Schiebemuffe (18) mit dem Aktor in eine Neutralstellung bringbar ist, bei der die Innenverzahnung (20) der Schiebemuffe (18) nicht im Eingriff mit den Außenverzahnungen (24, 28) der Synchronkörper (22, 26) ist und gleichzeitig im Eingriff mit der Außenverzahnung (36, 42) von nur einem der Synchronringe (34, 40) ist.

3.  Getriebe nach Anspruch 1 oder 2 bei dem
die Breite der Innenverzahnung (20) der Schiebemuffe (18) in der Richtung der Drehachse (X) größer ist als der Abstand der Außenverzahnungen (36, 42) der Synchronringe (34, 40) in der Richtung der Drehachse (X) und kleiner ist als der Abstand der Außenverzahnung (24, 28) eines der Synchronkörper (22, 26) zu der Außenverzahnung des jeweils anderen Synchronrings (40, 34) in der Richtung der Drehachse (X).

4.  Getriebe nach einem der Ansprüche 1 bis 3, bei dem
der Durchmesser der Innenverzahnung (20) der Schiebemuffe (18) größer ist als der Durchmesser der Innenverzahnung des kleineren Hohlrades (14, 16)..

5.  Getriebe nach einem der Ansprüche 1 bis 4, bei dem

die Verstellvorrichtung (46) aufweist,

eine Schneckenwelle (50), die vom Aktor (48) antreibbar ist, und
ein Schneckenrad (52), das koaxial zu der Schiebemuffe (18) angeordnet ist, außenumfangsseitig zu derselben derart angeordnet ist, dass, gesehen ausgehend von der Drehachse (X) in einer Radialrichtung senkrecht zu der Drehachse (X), die Schiebemuffe (18) das Schneckenrad (52) mindestens teilweise überlappt, und mittels der Schneckenwelle (50) um die Drehachse (X) drehbar ist, und
einen Führungspin (56), der an der Schiebemuffe (18) vorgesehen ist und radial nach außen von dieser vorsteht,

wobei
in dem Schneckenrad (52) eine Führungsnut (54) zur Aufnahme des Führungspins (56) vorgesehen ist, die in einem Winkel ($\alpha$) zu der Umfangsrichtung verläuft, so dass bei der Drehung des Schneckenrads (52) um den Winkel ($\beta$) eine Verschiebung der Schiebemuffe (18) um einen Weg (x) erfolgt, und
der Aktor als Elektromotor ausgebildet ist.

6.  Getriebe nach einem der Ansprüche 1 bis 5, bei dem
die Hohlräder (14, 16) radial auf den Planetenrädern (6', 6) gelagert sind und zur axialen Lagerung zwischen den Hohlrädern sowie zwischen ihren voneinander abgewandten Seiten und dem Gehäuse (G) je ein Lager angeordnet ist.

7.  Getriebe nach einem der Ansprüche 1 bis 6, bei dem
in der Synchronisationsstellung die Innenverzahnung (20) der Schiebemuffe (18) mit der Außenverzahnung (42) eines der Synchronringe (40) zum Aufbringen einer Axialkraft auf diesen Synchronring (40) teilweise derart im Eingriff ist, dass Zahnköpfe und -täler der Innenverzahnung (20) der Schiebemuffe (18) und der Außenverzahnung (42) dieses Synchronrings (40) um einen Winkel verdreht zueinander sind, und gleichzeitig mit der Außenverzahnung (36) des anderen Synchronrings (34) derart in Eingriff ist, dass die Zahnköpfe und -täler der Innenverzahnung (20) der Schiebemuffe (18) und der Außenverzahnung (36) des anderen Synchronrings (34) nicht verdreht zueinander sind, so dass über diesen Zahneingriff keine Axialkraft auf diesen anderen Synchronring (34) aufgebracht wird.

8.  Getriebe nach einem der vorhergehenden Ansprüche, bei dem eine Breite der Innenverzahnung (20) der Schiebemuffe (18) zwischen 1% Prozent und 10 % kleiner als ein Abstand der Außenverzahnungen (24, 28) eines der Synchronkörper (22, 26) zu dem jeweils gegenüberliegenden Synchronring (40, 34) ist.

9.  Elektrisches Antriebssystem für ein Fahrzeug, mit

einer elektrischen Antriebsmaschine (EM),
einem Getriebe nach einem der Ansprüche 1 bis 8,
wobei
das Antriebssystem so ausgebildet ist, dass in einem Schaltvorgang, in dem die Schiebemuffe (18) von der ersten Stellung in die zweite Stellung bewegt wird, in der Synchronisationsstellung über die Anlage des Reibbereichs (44) des zweiten Synchronrings (40) an den Reibbereich (32) des zweiten Synchronkörpers (26) zwischen diesen ein Drehmoment übertragbar ist, dass größer als 30% des Maximaldrehzahldrehmoments der elektrischen Antriebsmaschine (EM), das von der elektrischen Antriebsmaschine (EM) bei maximaler Drehzahl ($n_{max}$) maximal abgebbar ist, ist.

10. Elektrisches Antriebssystem nach Anspruch 9, bei dem

in dem Schaltvorgang, in dem die Schiebemuffe (18) von der ersten Stellung in die zweite Stellung bewegt wird, in der Synchronisationsstellung das über die Reibbereiche (44, 32) übertragene Drehmoment im Wesentlichen konstant bleibt, oder
in dem Schaltvorgang, in dem die Schiebemuffe (18) von der ersten Stellung in die zweite Stellung bewegt wird, in der Synchronisationsstellung das über die Reibbereiche (44, 32) übertragene Drehmoment mit der Abnahme der Drehzahl der elektrischen Antriebsmaschine derart erhöht wird, dass während der Synchronisation an der Ausgangswelle (A) eine konstante Leistung abgegeben wird und/oder die während der Synchronisation an der Ausgangswelle (A) abgegebene Leistung der an der Ausgangswelle (A) abgegebenen Leistung unmittelbar vor dem Bewegen der Schiebemuffe (18) von der ersten Stellung in die zweite Stellung entspricht.

11. Elektrisches Antriebssystem nach Anspruch 9 oder 10, bei dem
der Schaltvorgang, in dem die Schiebemuffe (18) von der ersten Stellung in die zweite Stellung bewegt wird, bei einer Schaltdrehzahl ausgelöst wird, die so festgelegt ist, dass bei im wesentlichen konstanter Drehzahl der Ausgangswelle (A) während dem Schalten nach der Schaltung die Drehzahl der elektrischen Antriebsmaschine (EM) im Konstantleistungsbereich liegt.

12. Elektrisches Antriebssystem nach einem der Ansprüche 9 bis 11, bei der
der Schaltvorgang, in dem die Schiebemuffe (18) von der ersten Stellung in die zweite Stellung bewegt wird, bei der Maximaldrehzahl ($n_{max}$) der elektrischen Antriebsmaschine (EM) ausgelöst wird.

13. Elektrisches Antriebssystem nach einem der Ansprüche 9 bis 12, bei der

das in der Synchronisationsstellung über die Reibbereiche (44, 32) übertragene Drehmoment dem Maximaldrehzahldrehmoment entspricht und/oder während der Synchronisation konstant bleibt, so dass eine an der Ausgangswelle (A) unmittelbar vor dem Schaltvorgang abgegebene Leistung mit dem Absinken der Drehzahl der elektrischen Antriebsmaschine während dem Schaltvorgang nur langsam kontinuierlich absinkt, oder
das in der Synchronisationsstellung über die Reibbereiche (44, 32) übertragene Drehmoment mindestens zeitweise geringer oder größer als das Maximaldrehzahldrehmoment ist und/oder während der Synchronisation sinkt oder steigt, so dass eine an der Ausgangswelle (A) unmittelbar vor dem Schaltvorgang abgegebene Leistung während der Synchronisation konstant bleibt oder sich nur kontinuierlich und nicht sprunghaft ändert.

14. Elektrisches Antriebssystem nach einem der Ansprüche 9 bis 13, bei dem
das Antriebssystem so ausgebildet ist, dass während dem Bewegen der Schiebemuffe (18) von der ersten Stellung in die zweite Stellung das Drehmoment, das an der Ausgangswelle zur Verfügung steht, nicht die Richtung wechselt, so dass durchgehend Vortrieb lieferbar ist.

15. Elektrisches Antriebssystem nach einem der Ansprüche 9 bis 14, bei dem
das Antriebssystem so ausgebildet ist, dass während dem Bewegen der Schiebemuffe (18) von der ersten Stellung in die zweite Stellung in der Synchronisationsstellung die elektrische Antriebsmaschine zusätzlich zu der Abbremsung durch die Reibbereiche (44, 32) elektrisch abgebremst wird.

16. Elektrisches Antriebssystem nach einem der Ansprüche 9 bis 15, bei dem
in einem Schaltvorgang, in dem die Schiebemuffe (18) von der ersten Stellung in die zweite Stellung bewegt wird, in der Synchronisationsstellung ein Drehmoment des zweiten Hohlrads (16) durch die Reibbereiche (44, 32) abgestützt wird, so dass ein Drehmoment an der Ausgangswelle (A) zur Verringerung oder Vermeidung einer Lastunterbrechung bewirkt wird.

**Claims**

1. Transmission for an electric drive system for a vehicle, including a housing (G),

an input shaft (E) supported in the housing (G) to be rotatable about a rotational axis (X),
an output shaft (A) supported in the housing (G) to be rotatable about the rotational axis (X), a first planetary transmission (10) and a second planetary transmission (12), which are disposed adjacent to each other coaxially with the rotational axis (X), and have different gear ratios with respect to each other, wherein the first planetary transmission (10) and the second planetary transmission (12) include a common planetary carrier (S), which is supported in the housing (G) to be rotatable about the rotational axis (X) and is connected to the output shaft (A), and the first planetary transmission (10) includes a first ring gear (14), which is supported in the housing (G) to be rotatable around the rotational axis (X), and the second planetary transmission (12) includes a second ring gear (16), which is supported in the housing (G) to be rotatable about the rotational axis (X),

a locking device (2), using which the first ring gear (14) or the second ring gear (16) is selectively lockable to the housing (G) so that, when the first ring gear (14) is locked, a torque is transmissible from the input shaft (E) to the output shaft (A) via the first planetary transmission (10) at a first gear ratio and, when the second ring gear (16) is locked, a torque is transmissible from the input shaft (E) to the output shaft (A) via the second planetary transmission (12) at a second gear ratio,

**characterized in that**
the locking device (2) includes

> a sliding sleeve (18), which is disposed in the housing (G) to be non-rotatable relative to the housing (G) while being axially movable along the rotational axis (X), and which has an internal gearing (20),
> a first synchronizer body (22), which is rigidly connected to the first ring gear (14) or is formed integrally therewith, and which has an external gearing (24) that is configured such that it is bringable into engagement with the internal gearing (20) of the sliding sleeve (18) by moving the sliding sleeve (18) along the rotational axis (X) into a first position, and a second synchronizer body (26), which is rigidly connected to the second ring gear (16) or is formed integrally therewith, and which has an external gearing (28) that is configured such that it is bringable into engagement with the internal gearing (20) of the sliding sleeve (18) by moving the sliding sleeve (18) along the rotational axis (X) into a second position, and a displacing device (46) having an actuator, using which the sliding sleeve (18) is displaceable along the rotational axis (X) between the first position and the second position,

> the first synchronizer body (22) has a friction region (30) on the side facing the second synchronizer body (26), and the second synchronizer body (26) has a friction region (32) on the side facing the first synchronizer body (22),
> a first synchronizer ring (34) is provided that has an external gearing (36), which is configured such that it is bringable into engagement with the internal gearing (20) of the sliding sleeve (18) by moving the sliding sleeve (18), using the actuator, along the rotational axis (X), and that has a friction region (38), which is configured for abutment against the friction region (30) of the first synchronizer body (22), and a second synchronizer ring (40) is provided that has an external gearing (42), which is configured such that it is bringable into engagement with the internal gearing (20) of the sliding sleeve (18) by moving the sliding sleeve (18), using the actuator, along the rotational axis (X), and that has a friction region (44), which is configured for abutment against the friction region (32) of the second synchronizer body (26),
> the locking device is configured such that, in a movement along the rotational axis (X), the sliding sleeve (18) is bringable using the actuator into a synchronization position, in which the internal gearing (20) of the sliding sleeve (18) is not in engagement with the external gearings (24, 28) of the two synchronizer bodies (22, 26), and simultaneously the internal gearing (20) of the sliding sleeve (18) is at least partially in engagement with the external gearings (36, 42) of both synchronizer rings, and preferably force is exerted by the sliding sleeve (18) in the direction of the rotation axis (X) onto one of the synchronizer rings (34, 40) such that the corresponding synchronizer body (22, 26) is brakeable by the friction engagement with the one synchronizer ring (34, 40), and
> the friction region (44) of the second synchronizer ring (40) and the friction region (32) of the second synchronizer body (26) are dimensioned such that their torque capacity is high enough that, when the sliding sleeve (18) moves from the first position into the second position, a torque is transmissible to the output shaft (A) in the synchronization position.

2. Transmission according to claim 1, wherein the locking device (2) is further configured such that the sliding sleeve (18) is bringable using the actuator into a neutral position, in which the internal gearing (20) of the sliding sleeve (18) is not in engagement with the external gearings (24, 28) of the synchronizer bodies (22, 26), and is simultaneously in engagement with the external gearing (36, 42) of only one of the synchronizer rings (34, 40).

3. Transmission according to claim 1 or 2, wherein the width of the internal gearing (20) of the sliding sleeve (18) in the direction of the rotational axis (X) is greater than the spacing of the external gearings (36, 42) of the synchronizer rings (34, 40) in the direction of the rotational axis (X) and is smaller than the distance of the external gearing (24, 28) of one of the synchronizer bodies (22, 26) to the external gearing of the respective other synchronizer ring (40, 34) in the direction of the rotational axis (X).

4. Transmission according to one of claims 1 to 3, wherein
   the diameter of the internal gearing (20) of the sliding sleeve (18) is greater than the diameter of the internal gearing of the smaller ring gear (14, 16).

5. Transmission according to one of claims 1 to 4, wherein

   the displacing device (46) includes,

      a worm shaft (50) that is drivable by the actuator (48), and
      a worm gear (52) that is disposed coaxially with the sliding sleeve (18) and is disposed on the outer circumference side with respect thereto such that, as viewed starting from the rotational axis (X) in a radial direction perpendicular to the rotational axis (X), the sliding sleeve (18) at least partially overlaps the worm gear (52) and is rotatable by the worm shaft (50) about the rotational axis (X), and
      a guide pin (56) that is provided on the sliding sleeve (18) and protrudes radially outward therefrom,

   wherein
   a guide groove (54) for receiving the guide pin (56) is provided in the worm gear (52), the guide groove (54) extending at an angle ($\alpha$) to the circumferential direction so that, during the rotation of the worm gear (52) by the angle ($\beta$), a displacement of the sliding sleeve (18) along a distance (x) occurs, and
   the actuator is configured as an electric motor.

6. Transmission according to one of claims 1 to 5, wherein
   the ring gears (14, 16) are supported radially on the planetary gears (6', 6), and bearings are respectively disposed for axial support between the ring gears and between their sides facing away from each other and the housing.

7. Transmission according to one of claims 1 to 6, wherein
   in the synchronization position, the internal gearing (20) of the sliding sleeve (18) is partially in engagement with the external gearing (42) of one of the synchronizer rings (40) to apply an axial force to this synchronizer ring (40) such that tooth-heads and -troughs of the internal gearing (20) of the sliding sleeve (18) and of the external gearing (42) of this synchronizer ring (40) are relatively rotated by an angle with respect to one another, and the tooth-heads and -troughs of the internal gearing (20) are simultaneously in engagement with the external gearing (36) of the other synchronizer ring (34) such that the tooth-heads and - troughs of the internal gearing (20) of the sliding sleeve (18) and of the external gearing (36) of the other synchronizer ring (34) are not relatively rotated with respect to each other, so that no axial force is applied to this other synchronizer ring (34) via this tooth engagement.

8. Transmission according to one of the preceding claims, wherein a width of the internal gearing (20) of the sliding sleeve (18) is between 1% and 10% smaller than a distance of the external gearings (24, 28) of one of the synchronizer bodies (22, 26) to the respective opposing synchronizer ring (40, 34).

9. Electric drive system for a vehicle, including

      an electric drive machine (EM),
      a transmission according to one of claims 1 to 8, wherein
      the drive system is configured such that, in a shifting process in which the sliding sleeve (18) is moved from the first position into the second position, a torque is transmissible between the friction region (44) and the friction region (32) in the synchronization position via the abutment of the friction region (44) of the second synchronizer ring (40) against the friction region (32) of the second synchronizer body (26), which torque is greater than 30% of the maximum rotational speed torque of the electric drive machine (EM) that is maximally deliverable by the electric drive machine (EM) at maximum rotational speed ($n_{max}$).

10. Electric drive system according to claim 9, wherein

      in the shifting process, in which the sliding sleeve (18) is moved from the first position into the second position, the torque transmitted in the synchronization position via the friction regions (44, 32) remains substantially constant, or in the shifting process, in which the sliding sleeve (18) is moved from the first position into the second position, the torque transmitted in the synchronization position via the friction regions (44, 32) is increased with the decrease of the rotational speed of the electric drive machine such that a constant power is delivered at the output shaft (A) during the synchronization, and/or the power delivered at the output shaft (A) during the synchronization corresponds to the power that is output at the output shaft (A) immediately before the moving of the sliding sleeve (18) from the first position into the second position.

**11.** Electric drive system according to claim 9 or 10, wherein
the shifting process, in which the sliding sleeve (18) is moved from the first position into the second position, is triggered at a shifting rotational speed that is set such that, at a substantially constant rotational speed of the output shaft (A) during the shifting, the rotational speed of the electric drive machine after the shifting falls in the constant power range.

**12.** Electric drive system according to one of claims 9 to 11, wherein
the shifting process, in which the sliding sleeve (18) is moved from the first position into the second position, is triggered at the maximum rotational speed ($n_{max}$) of the electric drive machine (EM).

**13.** Electric drive system according to one of claims 9 to 12, wherein

the torque, which is transmitted in the synchronization position via the friction regions (44, 32), corresponds to the maximum rotational speed torque, and/or remains constant during the synchronization, so that a power delivered at the output shaft (A) immediately before the shifting process continuously drops only slowly with the decreasing of the rotational speed of the electric drive machine during the shifting process, or
the torque, which is transmitted in the synchronization position via the friction regions (44, 32), is at least temporarily lower or higher than the maximum rotational speed torque, and/or decreases or increases during the synchronization, so that a power delivered at the output shaft (A) immediately before the shifting process remains constant during the synchronization, or changes only continuously and not in an erratic manner.

**14.** Electric drive system according to one of claims 9 to 13, wherein
the drive system is configured such that, during the moving of the sliding sleeve (18) from the first position into the second position, the torque that is available at the output shaft does not change direction, so that propulsion is continuously deliverable.

**15.** Electric drive system according to one of claims 9 to 14, wherein
the drive system is configured such that, during the moving of the sliding sleeve (18) from the first position into the second position, the electric drive machine is electrically braked in the synchronization position in addition to the braking by the friction regions (44, 32).

**16.** Electric drive system according to one of claims 9 to 15, wherein
in a shifting process, in which the sliding sleeve (18) is moved from the first position into the second position, a torque of the second ring gear (16) is supported in the synchronization position by the friction regions (44, 32), so that a torque is effected on the output shaft (A) for reducing or preventing a load interruption.

**Revendications**

**1.** Transmission destinée à un système d'entraînement électrique pour un véhicule, avec

un boîtier (G),
d'un arbre d'entrée (E) monté dans le boîtier (G) de manière à pouvoir tourner autour d'un axe de rotation (X),
un arbre de sortie (A) monté dans le boîtier (G) de manière à pouvoir tourner autour de l'axe de rotation (X),
un premier engrenage planétaire (10) et un second engrenage planétaire (12), qui sont agencés coaxialement l'un à côté de l'autre par rapport à l'axe de rotation (X) et qui présentent des rapports de transmission différents l'un par rapport à l'autre, dans laquelle le premier engrenage planétaire (10) et le second engrenage planétaire (12) présentent un porte-satellites commun (S), laquelle est logé dans le boîtier (G) de manière à pouvoir tourner autour de l'axe de rotation (X) et est relié à l'arbre de sortie (A), et le premier engrenage planétaire (10) présente une première couronne dentée (14) logée dans le boîtier (G) de manière à pouvoir tourner autour de l'axe de rotation (X) et le second engrenage planétaire (12) présente une seconde couronne dentée (16) logée dans le boîtier (G) autour de l'axe de rotation (X),
un dispositif de blocage (2) permettant de bloquer au choix la première couronne dentée (14) ou la seconde couronne dentée (16) sur le boîtier (G), de sorte que, lors du blocage de la première couronne dentée (14), un couple peut être transmis de l'arbre d'entrée (E) à l'arbre de sortie (A) par l'intermédiaire du premier engrenage planétaire (10) avec une première transmission et, lors du blocage de la seconde couronne dentée (16), un couple peut être transmis de l'arbre d'entrée (E) à l'arbre de sortie (A) par l'intermédiaire du second engrenage planétaire (12) avec une seconde transmission, **caractérisé en ce que**

le dispositif de blocage (2) présente

un manchon coulissant (18) qui est agencé de manière fixe en rotation dans le boîtier (G) de manière à pouvoir se déplacer axialement le long de l'axe de rotation (X) et qui présente une denture intérieure (20), un premier corps de synchronisation (22) qui est relié rigidement à la première couronne (14) ou formé d'un seul tenant avec celle-ci et qui présente une denture extérieure (24) qui est réalisée de manière à pouvoir être mise en prise avec la denture intérieure (20) du manchon coulissant (18) en déplaçant le manchon coulissant (18) le long de l'axe de rotation (X) dans une première position, et un second corps de synchronisation (26) relié rigidement à la seconde couronne (16) ou formé d'un seul tenant avec celle-ci et présentant une denture extérieure (28) réalisée pour être mise en prise avec la denture intérieure (20) du manchon coulissant (18) en déplaçant le manchon coulissant (18) le long de l'axe de rotation (X) vers une seconde position, et un dispositif de réglage (46) avec un actionneur, par lequel le manchon coulissant (18) peut être réglé le long de l'axe de rotation (X) entre la première position et la seconde position,

le premier corps de synchronisation (22) présente une zone de friction (30) sur le côté tourné vers le second corps de synchronisation (26) et le second corps de synchronisation (26) présente une zone de friction (32) sur le côté tourné vers le premier corps de synchronisation (22), une première bague de synchronisation (34) qui présente une denture extérieure (36) qui est réalisée de sorte qu'elle peut être mise en prise avec la denture intérieure (20) du manchon coulissant (18) en déplaçant le manchon coulissant (18) au moyen de l'actionneur le long de l'axe de rotation (X), et une zone de friction (38) qui est réalisée pour s'appuyer contre la zone de friction (30) du premier corps de synchronisation (22), et une seconde bague de synchronisation (40) qui présente une denture extérieure (42) qui est réalisée de sorte qu'elle peut être mise en prise avec la denture intérieure (20) du manchon coulissant (18) en déplaçant le manchon coulissant (18) au moyen de l'actionneur le long de l'axe de rotation (X), et une zone de friction (44) qui est réalisée pour venir en appui contre la zone de friction (32) du second corps de synchronisation (26),

le dispositif de blocage est réalisé de sorte que le manchon coulissant (18) peut être amené avec l'actionneur, dans un mouvement le long de l'axe de rotation (X), dans une position de synchronisation dans laquelle la denture intérieure (20) du manchon coulissant (18) n'est pas en prise avec les dentures extérieures (24, 28) des deux corps de synchronisation (22, 26) et, simultanément, la denture intérieure (20) du manchon coulissant (18) est en prise avec les dentures extérieures (36, 42) des deux bagues de synchronisation est au moins partiellement en prise et, de préférence, une force est exercée par le manchon coulissant (18) sur l'une des bagues de synchronisation (34, 40) dans la direction de l'axe de rotation (X), de sorte que le corps de synchronisation correspondant (22, 26) peut être freiné par l'intermédiaire de la prise par friction avec l'une des bagues de synchronisation (34, 40), et

la zone de friction (44) de la seconde bague de synchronisation (40) et la zone de friction (32) du second corps de synchronisation (26) sont dimensionnées de sorte que leur capacité de couple est suffisamment grande pour qu'un couple puisse être transmis à l'arbre de sortie (A) lors du déplacement du manchon coulissant (18) de la première position à la seconde position dans la position de synchronisation.

2. Transmission selon la revendication 1, dans laquelle le dispositif de blocage (2) est en outre réalisé de sorte que le manchon coulissant (18) peut être amené avec l'actionneur dans une position neutre dans laquelle la denture intérieure (20) du manchon coulissant (18) n'est pas en prise avec les dentures extérieures (24, 28) des corps de synchronisation (22, 26) et est en même temps en prise avec la denture extérieure (36, 42) d'une seule des bagues de synchronisation (34, 40).

3. Transmission selon la revendication 1 ou 2 dans laquelle

la largeur de la denture intérieure (20) du manchon coulissant (18) dans la direction de l'axe de rotation (X) est supérieure à l'écart des dentures extérieures (36, 42) des bagues de synchronisation (34, 40) dans la direction de l'axe de rotation (X) et est inférieure à la distance entre la denture extérieure (24, 28) de l'un des corps de synchronisation (22, 26) et la denture extérieure de l'autre bague de synchronisation respective (40, 34) dans la direction de l'axe de rotation (X).

4. Transmission selon l'une quelconque des revendications 1 à 3, dans laquelle
le diamètre de la denture intérieure (20) du manchon coulissant (18) est plus grand que le diamètre de la denture intérieure de la plus petite couronne dentée (14, 16).

5. Transmission selon l'une quelconque des revendications 1 à 4, dans laquelle

le dispositif de réglage (46) présente

un arbre à vis sans fin (50) qui peut être entraîné par l'actionneur (48), et
une roue à vis sans fin (52), qui est agencée coaxialement au manchon coulissant (18), est agencée sur le côté périphérique extérieur de celui-ci de telle sorte que, vu à partir de l'axe de rotation (X) dans une direction radiale perpendiculaire à l'axe de rotation (X), le manchon coulissant (18) chevauche au moins partiellement la roue à vis sans fin (52), et peut être mis en rotation autour de l'axe de rotation (X) au moyen de l'arbre à vis sans fin (50), et

une broche de guidage (56) qui est prévue sur le manchon coulissant (18) et qui fait saillie radialement vers l'extérieur à partir de celui-ci, dans laquelle
une rainure de guidage (54) est prévue dans la roue à vis sans fin (52) pour recevoir la broche de guidage (56), laquelle s'étend selon un angle ($\alpha$) par rapport à la direction périphérique, de sorte que lors de la rotation de la roue à vis sans fin (52) selon l'angle ($\beta$), il se produit un déplacement du manchon coulissant (18) d'une course (x), et
l'actionneur est réalisé sous la forme d'un moteur électrique.

6. Transmission selon l'une quelconque des revendications 1 à 5, dans laquelle
les couronnes dentées (14, 16) sont montées radialement sur les roues planétaires (6', 6) et un palier est agencé pour le montage axial entre les couronnes dentées ainsi qu'entre leurs côtés opposés l'un à l'autre et le boîtier (G).

7. Transmission selon l'une quelconque des revendications 1 à 6, dans laquelle
dans la position de synchronisation, la denture intérieure (20) du manchon coulissant (18) est partiellement en prise avec la denture extérieure (42) de l'une des bagues de synchronisation (40) pour appliquer une force axiale sur cette bague de synchronisation (40), de sorte que les têtes et les creux des dents de la denture intérieure (20) du manchon coulissant (18) et de la denture extérieure (42) de cette bague de synchronisation (40) sont tournés selon un angle les uns par rapport aux autres, et est simultanément en prise avec la denture extérieure (36) de l'autre bague de synchronisation (34) de sorte que les pointes et les creux des dents de la denture intérieure (20) du manchon coulissant (18) et de la denture extérieure (36) de l'autre bague de synchronisation (34) ne sont pas tournés l'un par rapport à l'autre, de sorte qu'aucune force axiale n'est appliquée à cette autre bague de synchronisation (34) par le biais de cette prise de dent.

8. Transmission selon l'une quelconque des revendications précédentes, dans laquelle une largeur de la denture intérieure (20) du manchon coulissant (18) comprise entre 1 % et 10 % est inférieure à une distance entre les dentures extérieures (24, 28) de l'un quelconque des corps de synchronisation (22, 26) et la bague de synchronisation (40, 34) respectivement opposée.

9. Système d'entraînement électrique pour un véhicule, avec

un moteur à entraînement électrique (EM),
une transmission selon l'une quelconque des revendications 1 à 8,
dans laquelle
le système d'entraînement est réalisé de sorte que, dans une opération de commutation dans laquelle le manchon coulissant (18) est déplacé de la première position vers la seconde position, un couple peut être transmis entre eux dans la position de synchronisation par l'intermédiaire de l'application de la zone de friction (44) de la seconde bague de synchronisation (40) contre la zone de friction (32) du second corps de synchronisation (26), lequel est supérieur à 30 % du couple de rotation maximal du moteur à entraînement électrique (EM), lequel peut être fourni au maximum par le moteur à entraînement électrique (EM) à la vitesse de rotation maximale (nmax).

10. Système d'entraînement électrique selon la revendication 9, dans lequel

dans le processus de commutation dans lequel le manchon coulissant (18) est déplacé de la première position vers la seconde position, le couple transmis par l'intermédiaire des zones de friction (44, 32) reste sensiblement constant dans la position de synchronisation, ou
dans le processus de commutation dans lequel le manchon coulissant (18) est déplacé de la première position vers la seconde position, dans la position de synchronisation, le couple transmis via les zones de friction (44, 32) est augmenté avec la diminution de la vitesse de rotation du moteur à entraînement électrique de telle sorte qu'une puissance constante est délivrée à l'arbre de sortie (A) pendant la synchronisation et/ou que la puissance délivrée à l'arbre de sortie (A) pendant la synchronisation correspond à la puissance délivrée à l'arbre de sortie (A) immédiatement avant le déplacement du manchon coulissant (18) de la première position vers la seconde position.

11. Système d'entraînement électrique selon la revendication 9 ou 10, dans lequel
l'opération de commutation, dans laquelle le manchon coulissant (18) est déplacé de la première position vers la seconde position, est déclenchée à une vitesse de rotation de commutation qui est déterminée de sorte que, pour une vitesse de rotation sensiblement constante de l'arbre de sortie (A) pendant la commutation après la commutation, la vitesse de rotation du moteur à entraînement électrique (EM) se situe dans la plage de puissance constante.

12. Système d'entraînement électrique selon l'une quelconque des revendications 9 à 11, dans lequel
l'opération de commutation, dans laquelle le manchon coulissant (18) est déplacé de la première position vers la seconde position, est déclenchée à la vitesse de rotation maximale (nmax) du moteur à entraînement électrique (EM).

13. Système d'entraînement électrique selon l'une quelconque des revendications 9 à 12, dans lequel

le couple transmis dans la position de synchronisation par l'intermédiaire des zones de friction (44, 32) correspond au couple de rotation maximal et/ou reste constant pendant la synchronisation, de sorte qu'une puissance délivrée à l'arbre de sortie (A) immédiatement avant l'opération de commutation ne diminue que lentement et de manière continue avec la baisse de la vitesse de rotation de la machine d'entraînement électrique pendant l'opération de commutation, ou
le couple transmis dans la position de synchronisation par l'intermédiaire des zones de friction (44, 32) est au moins temporairement inférieur ou supérieur au couple de rotation maximal et/ou diminue ou augmente pendant la synchronisation, de sorte qu'une puissance délivrée à l'arbre de sortie (A) immédiatement avant l'opération de commutation reste constante pendant la synchronisation ou ne varie que de manière continue et non par à-coups.

14. Système d'entraînement électrique selon l'une quelconque des revendications 9 à 13, dans lequel
le système d'entraînement est réalisé de sorte que, pendant le déplacement du manchon coulissant (18) de la première position vers la seconde position, le couple qui est disponible sur l'arbre de sortie ne change pas de direction, de sorte que la propulsion peut être fournie en continu.

15. Système d'entraînement électrique selon l'une quelconque des revendications 9 à 14, dans lequel
le système d'entraînement est réalisé de sorte que pendant le déplacement du manchon coulissant (18) de la première position vers la seconde position dans la position de synchronisation, le moteur à entraînement électrique est freiné électriquement en plus du freinage exercé par les zones de friction (44, 32).

16. Système d'entraînement électrique selon l'une quelconque des revendications 9 à 15, dans lequel
dans une opération de commutation dans laquelle le manchon coulissant (18) est déplacé de la première position vers la seconde position, un couple de la seconde couronne dentée (16) est supporté par les zones de friction (44, 32) dans la position de synchronisation, de sorte qu'un couple est appliqué à l'arbre de sortie (A) pour réduire ou éviter une interruption de charge.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

18

39

34    39a    40

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013225519 A1
- US 2010267508 A1
- DE 102016201225 A1
- WO 2017186473 A1
- WO 2014120064 A1